# EUROPEAN PATENT APPLICATION

(11) **EP 4 036 790 A1**
(43) Date of publication of application: **03.08.2022**
(21) Application number: 20879240.8
(22) Date of filing: 22.10.2020
(51) Int. Cl.: G06K 9/00

(54) **IMAGE DISPLAY METHOD AND DEVICE**

(30) Priority: 22.10.2019 CN 201911008055
(71) Applicant: Huawei Technologies Co., Ltd., Longgang District, Shenzhen, Guangdong 518129 (CN)
(72) Inventor: HU, Shougang, Shenzhen, Guangdong 518129 (CN); ZHANG, Menghan, Shenzhen, Guangdong 518129 (CN); ZHAO, Lei, Shenzhen, Guangdong 518129 (CN); WANG, Haitao, Shenzhen, Guangdong 518129 (CN)
(74) Representative: Isarpatent
(86) International application number: PCT/CN2020/122648
(87) International publication number: WO 2021/078179

(57) **Abstract**

This application provides an image display method and device, and the method is applied to an electronic device having a display screen and a camera. The method includes: detecting a first operation performed by a user to start an application (310); displaying a first interface on the display screen in response to the first operation (320); detecting a second operation performed by the user in the first interface to indicate to shoot an image, or detecting a second operation performed by the user in the first interface to indicate to select an image (330); and displaying a multi-dimensional model of a target object in the first interface or a second interface in response to the second operation, where the multi-dimensional model is a multi-dimensional model constructed for the target object in a target image collected by the camera or in a selected target image, and model construction parameters required for constructing the multi-dimensional model are model construction parameters that match an object mask corresponding to the target object (340). The method can improve a display effect of the target object.

## Description

This application claims priority to Chinese Patent Application No. 201911008055.6, filed with the China National Intellectual Property Administration on October 22, 2019 and entitled "IMAGE DISPLAY METHOD AND DEVICE", which is incorporated herein by reference in its entirety.

### TECHNICAL FIELD

This application relates to the field of image processing technologies, and in particular, to an image display method and device.

### BACKGROUND

Currently, as smart terminal technologies develop, terminal devices are becoming more widespread. With continuous enhancement of a processing capability of the terminal device, people also gradually impose high requirements on an image displayed on the terminal device.

Currently, the terminal device can display a two-dimensional image and a video that includes two-dimensional image frames. A person or an object in the two-dimensional image or the video that includes two-dimensional images is two-dimensional. In other words, the terminal device can display only a two-dimensional person or object. Consequently, viewing experience of a user is poor.

### SUMMARY

This application provides an image display method and device, to improve an image display effect and correspondingly improve viewing experience of a user.

According to a first aspect, this application provides an image display method, applied to an electronic device having a display screen and a camera, and including: detecting a first operation performed by a user to start an application (for example, a camera application or another application); displaying a first interface on the display screen in response to the first operation; detecting a second operation performed by the user in the first interface to indicate to shoot an image, or detecting a second operation performed by the user in the first interface to indicate to select an image; and displaying a multi-dimensional model (for example, a three-dimensional model) of a target object in the first interface or a second interface in response to the second operation, where the multi-dimensional model (for example, a three-dimensional model) is a multi-dimensional model (for example, a three-dimensional model) constructed for the target object in a target image (for example, a single frame of image collected by the camera, where the target image in the specification is also referred to as an input image) collected by the camera or in a selected target image (for example, a single frame of image selected by the user, where the target image is also referred to as an input image), and model construction parameters required for constructing the multi-dimensional model (for example, a three-dimensional model) are model construction parameters that match an object mask (mask) of the target object.

In this application, the electronic device may be a mobile terminal (for example, a smartphone), an augmented reality (augmented reality, AR) device, a virtual reality (virtual reality, VR) device, a wearable device, a vehicle-mounted device, or the like.

The application is an application that is installed on the electronic device and that has an image display function. The application may be a camera application on the electronic device, or may be an application other than the camera on the electronic device. This is not limited in this application.

Optionally, in a possible implementation, the application may be a camera application on the electronic device. A first operation performed by the user to start the camera application is detected. A first interface (for example, a shooting interface) is displayed on the display screen in response to the first operation. A second operation performed by the user in the first interface to indicate to shoot an image is detected, or a second operation performed by the user in the first interface to indicate to select an image is detected. A multi-dimensional model of a target object is displayed in the first interface or a second interface in response to the second operation. In other words, in response to the second operation, the multi-dimensional model (for example, a three-dimensional model is superimposed onto a video preview (AR) interface of the camera) of the target object may be displayed in the first interface, or in an optional design manner, the multi-dimensional model of the target object is displayed in the second interface.

Optionally, in a possible implementation, the application may be an application (for example, a photo wakeup application) other than the camera application on the electronic device. A first operation performed by the user to start the photo wakeup application is detected. A first interface is displayed on the display screen in response to the first operation. A second operation performed by the user in the first interface to indicate to shoot an image is detected, or a second operation performed by the user in the first interface to indicate to select an image is detected. A multi-dimensional model of a target object is displayed in the first interface or a second interface in response to the second operation. In other words, in response to the second operation, the multi-dimensional model of the target object may be displayed in the first interface, or in an optional design manner, the multi-dimensional model of the target object is displayed in the second interface. The second interface herein is an interface different from the first interface.

In this application, the shot target image or the selected target image includes a target object for which a multi-dimensional model (for example, a three-dimensional model) needs to be constructed, and the target object may be a person, an animal, a plant, a sculpture, or the like.

Optionally, in some possible implementations, the target image is a color image, for example, an RGB image, a YUV image, or an HSV (Hue, Saturation, Value) image.

Optionally, in a possible implementation, the target image may be a single image that has depth information, for example, an RGBD image.

In this application, the electronic device constructs a multi-dimensional model (for example, a three-dimensional model) for the target object, and displays the multi-dimensional model in the first interface or the second interface. The model construction parameters required for constructing the multi-dimensional model are model construction parameters that match the object mask corresponding to the target object. The model construction parameters are a series of parameters required for constructing a model, and include but are not limited to a semantic parameter and a depth parameter. Because the model construction parameters are model construction parameters that match the object mask of the target object, the multi-dimensional model generated by using the model construction parameters matches the target object. This improves a modeling effect of the target object.

Optionally, in a possible implementation, the multi-dimensional model displayed in the first interface or the second interface in response to the second operation may be a static multi-dimensional model. The multi-dimensional model may be driven by a third operation input by the user to perform some actions, for example, turning, dancing, and doing exercise.

Optionally, in a possible implementation, the multi-dimensional model displayed in the first interface or the second interface in response to the second operation may be a dynamic multi-dimensional model.

It may be learned from the foregoing descriptions that, in this application, the electronic device displays the multi-dimensional model of the target object instead of a planar two-dimensional object, so that an effect of displaying the target object on the electronic device is improved. In this way, the user views the multi-dimensional model of the target object. Compared with viewing a two-dimensional target object, this method can enhance an authentic feeling of the user when viewing the target object, and improve user experience. Further, the model construction parameters required for constructing the multi-dimensional model are model construction parameters that match the object mask corresponding to the target object. Therefore, the multi-dimensional model constructed by using the model construction parameters is closer to the target object. This further improves a display effect of the target object.

With reference to the first aspect, in some implementations of the first aspect, a construction process includes: obtaining the object mask (mask) corresponding to the target object; obtaining a basic model (which may also be referred to as a basic model) corresponding to an attribute of the target object, and obtaining, based on the basic model, model construction parameters required for constructing a model of the target object; performing warp (warp) processing on the model construction parameters to obtain the model construction parameters that match the object mask; and constructing (for example, generating) the multi-dimensional model (for example, a three-dimensional model) based on the model construction parameters that match the object mask.

The object mask indicates a region that is in the target image and that is surrounded by a body contour of the target object. The basic model is a multi-dimensional model (for example, a three-dimensional model) that has been constructed in advance. Optionally, a polygon mesh model may be used as the basic model, for example, a triangle mesh model.

In this application, the model construction parameters required for constructing the model of the target object are obtained based on the basic model. Warp processing is performed on the model construction parameters to obtain the model construction parameters that match the object mask. The multi-dimensional model is constructed based on the model construction parameters that match the object mask. It may be learned that, in this application, warp processing is performed on the model construction parameters corresponding to the basic model to match the object mask of the target object, so as to construct the multi-dimensional model of the target object by using the matched model construction parameters. This can reduce a computing amount required for constructing the model and save computing resources.

It should be noted that the target object in the target image may be a person, an animal, a sculpture, or the like. Basic models of different objects may vary greatly. For example, a person model and an animal model vary greatly, a male model and a female model also vary greatly, and an adult model and a child model also vary greatly. Therefore, in this application, when the basic model is selected, the basic model corresponding to the attribute of the target object is selected. The attribute of the target object includes but is not limited to an age, a gender, a body shape, and a posture (for example, standing, sitting, and running). For example, if the target object is a male, a model corresponding to the male is selected. If the target object is a child, a model corresponding to the child is selected. If the target object is very fat, a model corresponding to a fat person is selected. It should be understood that, when the basic model is selected, one or more attributes of the target object may be considered.

Optionally, in a possible implementation, the model construction parameters may include a depth map (depth map) of a first surface of the basic model, a semantic map of the first surface of the basic model, a depth map (depth map) of a second surface of the basic model, and a semantic map of the second surface of the basic model. The first surface and the second surface are surfaces of the basic model. For example, the first surface may be a front side of the basic model, and the second surface may be a back side of the basic model.

It should be understood that, when the basic model includes a plurality of surfaces, a depth map and a semantic map of each surface may be obtained.

Optionally, in a possible implementation, the depth map and the semantic map of each surface of the basic model are obtained by rendering (rendering) each surface of the basic model.

The depth map of the first surface indicates depth information (namely, information about a distance between each vertex on the first surface and the camera) corresponding to each vertex on the first surface of the basic model, and the depth map of the second surface indicates depth information (namely, information about a distance between each vertex on the second surface and the camera) corresponding to each vertex on the second surface of the basic model. The semantic map of the first surface indicates semantic information (namely, information about a position of each vertex on the first surface on a body) corresponding to each vertex on the first surface of the basic model, and the semantic map of the second surface indicates semantic information (namely, information about a position of each vertex on the second surface on the body) corresponding to each vertex on the second surface of the basic model.

Although the attribute of the target object is considered when the basic model is selected, there may be some differences between the basic model and the target object, for example, a weight difference, a posture difference, and a height difference. Therefore, after the model construction parameters of the basic model are obtained, the model construction parameters are not directly used to construct the model. Instead, warp (warp) processing is performed on the model construction parameters, so that warped model construction parameters match the object mask. Warp processing may include but is not limited to translation transformation, affine transformation, rotation transformation, and distortion transformation. In this way, the model generated based on the warped model construction parameters is closer to the target object.

The three-dimensional model of the target object may be generated only by using a single target image and the basic model. Compared with an existing model reconstruction technology, target images at a plurality of angles of view do not need to be collected, and a video in a same scene does not need to be collected. Instead, only a single target image needs to be collected, the model construction parameters of the basic model are adjusted to match the object mask of the target object, and the model is generated based on the matched model construction parameters. Therefore, preparation working for model reconstruction is reduced. In addition, a computing amount of model reconstruction is reduced, and computing resources are saved. Further, because the model construction parameters for generating the model match the object mask of the target object, the generated multi-dimensional model matches the object mask of the target object. This improves a modeling effect.

With reference to the first aspect, in some implementations of the first aspect, before the obtaining, based on the basic model, model construction parameters required for constructing a model of the target object, the method further includes: adjusting the basic model based on the object mask, so that a body shape of an adjusted basic model adaptively matches (is as close as possible to) a body shape (for example, a height and a weight) of the target object; or obtaining joint information corresponding to the target object, and adjusting the basic model based on the object mask and the joint information, so that a body shape and a posture (for example, a joint position) of an adjusted basic model adaptively match a body shape and a posture of the target object, where correspondingly, the model construction parameters required for constructing the model of the target object are obtained based on the adjusted basic model.

An adjustment process may be executed through iterative optimization. The parameters of the basic model are continuously adjusted based on the object mask, so that the body shape (for example, a height and a weight) of the adjusted basic model is as close as possible to the body shape of the target object. Alternatively, the parameters of the basic model are continuously adjusted based on the object mask and the joint information, so that the posture of the adjusted basic model is as close as possible to the posture of the target object (for example, a joint position in the adjusted basic model is closer to a joint position of the target object, or a length ratio of a trunk to a leg of the adjusted basic model is closer to a length ratio of a trunk to a leg of the target object), and the body shape (for example, a height and a weight) of the adjusted basic model is as close as possible to the body shape of the target object.

A process in which the basic model is adjusted based on the object mask is used as an example. In this implementation, a degree at which the body shape of the basic model matches the body shape of the target object is used as an iteration termination condition. In an example iteration process, the parameters of the basic model are continuously adjusted. If a degree at which a body shape of a basic model obtained after the parameters are adjusted matches the body shape of the target object is less than a matching threshold, the parameters of the basic model continue to be adjusted. If a degree at which a body shape of a basic model obtained after the parameters are adjusted matches the body shape of the target object is higher than or equal to a matching threshold, the iteration process is stopped. In another example iteration process, the parameters of the basic model are continuously adjusted, and the iteration process is stopped when a degree at which the body shape of the adjusted basic model matches the body shape of the target object no longer increases.

With reference to the first aspect, in some implementations of the first aspect, before the obtaining, based on the basic model, model construction parameters required for constructing a model of the target object, the method further includes: adjusting the basic model N times based on the object mask, so that a degree at which a body shape of a basic model adjusted for an n^{th} time matches a body shape of the target object is better than a degree at which a body shape of a basic model adjusted for an m^{th} time matches the body shape of the target object; or obtaining joint information corresponding to the target object, and adjusting the basic model N times based on the object mask and the joint information, so that a degree at which a body shape and a posture of a basic model adjusted for an n^{th} time match a body shape and a posture of the target object is better than a degree at which a body shape and a posture of a basic model adjusted for an m^{th} time match the body shape and the posture of the target object, where N represents a preset quantity of adjustment times (for example, a maximum quantity of adjustment times), N, n, and m are positive integers, n is greater than m, and n and m are less than or equal to N; and correspondingly, the model construction parameters required for constructing the model of the target object are obtained based on the basic model adjusted N times.

In this implementation, the maximum quantity of adjustment times is used as an iteration termination condition. An example in which the maximum quantity of adjustment times is N is used. In this way, the degree at which the body shape of the basic model adjusted for the n^{th} time matches the body shape of the target object is better than the degree at which the body shape of the basic model adjusted for the m^{th} time matches the body shape of the target object, or the degree at which the body shape and the posture of the basic model adjusted for the n^{th} time match the body shape and the posture of the target object is better than the degree at which the body shape and the posture of the basic model adjusted for the m^{th} time match the body shape and the posture of the target object. It should be understood that, in an iteration process, it cannot be ensured that a degree at which the body shape and the posture of the basic model match the body shape and the posture of the target object is better in each time of adjustment, but the body shape and the posture of the adjusted basic model are closer to the body shape and the posture of the target object in terms of an overall trend, where the n^{th} time of adjustment is after the m^{th} time of adjustment, and the n^{th} time of adjustment may not be limited to next adjustment adjacent to the m^{th} time of adjustment.

Before the model is generated, first, the basic model is adjusted by using the object mask, so that the body shape and the posture of the adjusted basic model are as close as possible to the body shape and the posture of the target object. Then, the model construction parameters are extracted based on the adjusted basic model, and warp processing is performed on the model construction parameters based on the object mask, so that the warped model construction parameters highly match the object mask. Therefore, a modeling effect is improved.

With reference to the first aspect, in some implementations of the first aspect, the obtaining a basic model corresponding to an attribute of the target object includes: obtaining the attribute of the target object based on the target image, where the attribute includes at least one of the following: a gender, an age, a body shape, and a posture; and selecting the basic model (which may also be referred to as a template model) corresponding to the attribute of the target object from a basic model set (which may also be referred to as a template model set), where the basic model set includes a plurality of basic models, and the basic models correspond to different attributes.

The basic model set may include a plurality of basic models, and each basic model corresponds to one or more attributes. For example, an attribute corresponding to a basic model 1 is a male, an adult, and a fat person, an attribute corresponding to a basic model 2 is a female and a child, an attribute corresponding to a basic model 3 is an elder and a thin person, an attribute corresponding to a basic model 4 is a cat, and an attribute corresponding to a basic model 5 is a dog. In this way, the target image may be first analyzed and identified to determine the attribute of the target object. Then, a basic model having a highest matching degree with the attribute of the target object is selected from the basic model set based on the attribute of the target object.

The selected basic model in this application is selected based on the attribute of the target object. Therefore, the multi-dimensional model obtained through modeling processing based on the basic model can effectively express the target object. This improves a modeling effect.

With reference to the first aspect, in some implementations of the first aspect, the basic model includes a plurality of body parts, each body part includes a plurality of vertices, a range of semantic information corresponding to vertices in different body parts is different, and semantic information corresponding to any two vertices in a same body part is different; or the basic model includes a plurality of object parts, each object part includes a plurality of vertices, a range of semantic information corresponding to vertices in different object parts is different, and semantic information corresponding to any two vertices in a same object part is different.

The target object may include a plurality of object parts, and each object part is a region of the target object. It should be understood that object part division manners corresponding to different target objects may be different.

A human body is used as an example. The target object is divided into a plurality of body parts, for example, a head, a trunk, a left arm, a right arm, a left leg, a right leg, a left hand, and a right hand. The basic model in this application is different from an existing human model. In the existing human model, semantic information is assigned to each body part. For example, semantic information corresponding to the head is 1, namely, semantic information corresponding to each vertex in the head is 1, and semantic information corresponding to the trunk is 2, namely, semantic information corresponding to each vertex in the trunk is 2. In this application, a range of semantic information corresponding to vertices in different body parts in the basic model is different, and semantic information corresponding to any two vertices in a same body part is different, so that semantic information corresponding to any two vertices in the basic model is different.

In this application, semantic information corresponding to any two vertices in the basic model is different, so that vertices in the basic model can accurately correspond to different positions on the target object. In other words, the basic model can distinguish between different positions on the target object, so that the basic model describes the target object more accurately. In this way, subsequent modeling processing is performed based on a basic model that has accurate semantic information. This can improve a modeling effect.

With reference to the first aspect, in some implementations of the first aspect, the model construction parameters include a depth map (depth map) of a first surface of the basic model, a semantic map of the first surface of the basic model, a depth map (depth map) of a second surface of the basic model, and a semantic map of the second surface of the basic model.

In a possible implementation, the depth map of the first surface and the semantic map of the first surface may be obtained by rendering (rendering) the first surface (for example, a front side) of the basic model, and the depth map of the second surface and the semantic map of the second surface may be obtained by rendering the second surface (for example, a back side) of the basic model.

The depth map of the first surface indicates depth information (namely, information about a distance between each vertex on the first surface and the camera) corresponding to each vertex on the first surface of the basic model, and the depth map of the second surface indicates depth information (namely, information about a distance between each vertex on the second surface and the camera) corresponding to each vertex on the second surface of the basic model. The semantic map of the first surface indicates semantic information (namely, information about a position of each vertex on the first surface on a body) corresponding to each vertex on the first surface of the basic model, and the semantic map of the second surface indicates semantic information (namely, information about a position of each vertex on the second surface on the body) corresponding to each vertex on the second surface of the basic model.

With reference to the first aspect, in some implementations of the first aspect, the performing warp processing on the model construction parameters to obtain the model construction parameters that match the object mask includes: performing warp processing on the depth map of the first surface based on the object mask and the semantic map of the first surface, so that a warped depth map of the first surface matches the object mask; and performing warp processing on the depth map of the second surface based on the object mask and the semantic map of the second surface, so that a warped depth map of the second surface matches the object mask.

The front side is used as an example. Because a front depth map and a front semantic map are obtained by rendering (rendering) the front side of the basic model, pixels in the front depth map are in a one-to-one correspondence with pixels in the front semantic map. In other words, pixels at same positions in the front depth map and the front semantic map correspond to a same vertex in the basic model. Therefore, a correspondence between each pixel in the front depth map and each pixel in the object mask may be determined by using the front semantic map. In this way, warp processing is performed on the front depth map based on the correspondence between each pixel in the front depth map and each pixel in the object mask, so that a warped front depth map matches the object mask.

It should be understood that an adjustment process of a back depth map is similar to the adjustment process of the front depth map.

It should be noted that, when warp processing is performed on the model construction parameters, warp processing may be performed only on the front depth map and the back depth map, and warp processing is not performed on the front semantic map and a back semantic map. It can be understood that, the pixels in the front depth map are in a one-to-one correspondence with the pixels in the front semantic map, and pixels in the back depth map are in a one-to-one correspondence with pixels in the back semantic map. Therefore, after warp processing is performed on the front depth map and the back map, semantic information of each pixel in a front depth map and a back depth map that are obtained after warp processing may be determined based on the foregoing correspondence.

With reference to the first aspect, in some implementations of the first aspect, the constructing the multi-dimensional model based on the model construction parameters that match the object mask includes: performing mesh processing on the depth map, of the first surface, that matches the object mask and that is obtained after warp processing, to obtain mesh (mesh) information of the first surface; performing mesh processing on the depth map, of the second surface, that matches the object mask and that is obtained after warp processing, to obtain mesh (mesh) information of the second surface; and fusing the mesh information of the first surface with the mesh information of the second surface to obtain the multi-dimensional model of the target object.

Optionally, in a possible implementation, mesh processing may be performed by using a Poisson (possion) reconstruction technology.

Optionally, in a possible implementation, after the mesh information of the first surface and the mesh information of the second surface are obtained, optimization adjustment may be further performed on the mesh information of the first surface based on the semantic map of the first surface, and optimization adjustment may be further performed on the mesh information of the second surface based on the semantic map of the second surface. In this way, a model obtained by fusing the mesh information, that is of the first surface and that is obtained after optimization adjustment, with the mesh information, that is of the second surface and that is obtained after optimization adjustment, better matches the target object. This improves a modeling effect.

With reference to the first aspect, in some implementations of the first aspect, the object mask corresponding to the target object is obtained by using the following method: performing joint extraction on the target object in the target image to obtain the joint information corresponding to the target object; and segmenting the target image based on the joint information of the target object, to obtain the object mask corresponding to the target object.

An example in which the target object is a person is used. The extracted joint information includes but is not limited to a head, a neck, a right shoulder, a right elbow, a right wrist, a left shoulder, a left elbow, a left wrist, a right hip joint, a right knee, a right ankle, a left hip joint, a left knee, a left ankle, and a body center point. The target object in the icon image is segmented based on the extracted joint information. This can improve image segmentation accuracy, so that the object mask that is of the target object and that is obtained through segmentation is more accurate.

With reference to the first aspect, in some implementations of the first aspect, after the constructing the multi-dimensional model, the method further includes: extracting texture information of the target object from the target image, and fusing the texture information with the model of the target object, so that the multi-dimensional model displayed in the first interface or the second interface is a multi-dimensional model obtained after fusion.

Optionally, the texture information includes but is not limited to skin information and clothing information. In other words, texture information such as skin and clothing of a person is extracted from the target image, a texture mapping relationship is established between the texture information and the generated model, the texture information of the target object is fused with the generated multi-dimensional model based on the texture mapping relationship, to obtain a multi-dimensional model obtained after the texture information is fused, and the multi-dimensional model obtained after fusion is displayed in the first interface or the second interface, so that the multi-dimensional model looks more authentic, and a display effect is improved.

With reference to the first aspect, in some implementations of the first aspect, the method further includes: detecting a third operation performed by the user in the first interface or the second interface, where the third operation is used to indicate a dynamic effect of the model; and displaying a dynamic multi-dimensional model in the first interface or the second interface in response to the third operation, where the dynamic multi-dimensional model is obtained by adding the dynamic effect to the multi-dimensional model obtained after fusion.

Optionally, the first interface or the second interface may further include at least one interactive control. Each interactive control may correspond to one dynamic effect. For example, the interactive control may be used to rotate the multi-dimensional model leftward or rightward. Certainly, the multi-dimensional model may be rotated in another direction. The interactive control may be used to add some rendering effects to the model, for example, a raindrop effect and an effect of floating banknotes in the air. Alternatively, the interactive control may be used to add some animation effects to the model, for example, drive the model to perform some actions, for example, dancing and doing exercise. After detecting the third operation input by the user by using the interactive control, the electronic device adds a dynamic effect corresponding to the interactive control to the multi-dimensional model, to obtain a dynamic multi-dimensional model. In this way, the electronic device displays the dynamic multi-dimensional model in the first interface or the second interface, so that the user views the multi-dimensional model with the dynamic effect. This further improves viewing experience of the user.

According to a second aspect, this application provides an image display device, including a detection unit and a processing unit. The detection unit is configured to detect a first operation performed by a user to start an application (a camera application or another application). The processing unit is configured to display a first interface on a display screen in response to the first operation. The detection unit is further configured to: detect a second operation performed by the user in the first interface to indicate to shoot an image, or detect a second operation performed by the user in the first interface to indicate to select an image. The processing unit is further configured to display a multi-dimensional model (for example, a three-dimensional model) of a target object in the first interface or a second interface in response to the second operation, where the multi-dimensional model is a multi-dimensional model constructed for the target object in a target image (for example, a single frame of image collected by the camera, where the target image may also be referred to as an input image) collected by a camera or in a selected target image (for example, a single frame of image selected by the user, where the target image may also be referred to as an input image), and model construction parameters required for constructing the multi-dimensional model are model construction parameters that match an object mask (mask) corresponding to the target object.

In this application, the image display device may be an electronic device, and may be a mobile terminal (for example, a smartphone), an augmented reality (augmented reality, AR) device, a virtual reality (virtual reality, VR) device, a wearable device, a vehicle-mounted device, or the like.

The application is an application that is installed on the electronic device and that has an image display function. The application may be a camera application on the electronic device, or may be an application other than the camera on the electronic device.

Optionally, in a possible implementation, the application may be a camera application on the electronic device. A first operation performed by the user to start the camera application is detected. A first interface (for example, a shooting interface) is displayed on the display screen in response to the first operation. A second operation performed by the user in the first interface to indicate to shoot an image is detected, or a second operation performed by the user in the first interface to indicate to select an image is detected. A multi-dimensional model of a target object is displayed in the first interface or a second interface in response to the second operation. In other words, in response to the second operation, the multi-dimensional model (for example, a three-dimensional model is superimposed onto a video preview (AR) interface of the camera) of the target object may be displayed in the first interface, or in an optional design manner, the multi-dimensional model of the target object is displayed in the second interface.

Optionally, in a possible implementation, the application may be an application (for example, a photo wakeup application) other than the camera application on the electronic device. A first operation performed by the user to start the photo wakeup application is detected. A first interface is displayed on the display screen in response to the first operation. A second operation performed by the user in the first interface to indicate to shoot an image is detected, or a second operation performed by the user in the first interface to indicate to select an image is detected. A multi-dimensional model of a target object is displayed in the first interface or a second interface in response to the second operation. In other words, in response to the second operation, the multi-dimensional model of the target object may be displayed in the first interface, or in an optional design manner, the multi-dimensional model of the target object is displayed in the second interface. The second interface herein is an interface different from the first interface.

In this application, the shot target image or the selected target image includes a target object for which a multi-dimensional model (for example, a three-dimensional model) needs to be constructed, and the target object may be a person, an animal, a sculpture, or the like.

Optionally, in some possible implementations, the target image is a color image, for example, an RGB image, a YUV image, or an HSV image.

Optionally, in a possible implementation, the target image may be a single image that has depth information, for example, an RGBD image.

In this application, the electronic device constructs a multi-dimensional model (for example, a three-dimensional model) for the target object, and displays the multi-dimensional model in the first interface or the second interface. The model construction parameters required for constructing the multi-dimensional model are model construction parameters that match the object mask corresponding to the target object. The model construction parameters are a series of parameters required for constructing a model, and include but are not limited to a semantic parameter and a depth parameter. Because the model construction parameters are model construction parameters that match the object mask of the target object, the multi-dimensional model generated by using the model construction parameters matches the target object. This improves a modeling effect of the target object.

Optionally, in a possible implementation, the multi-dimensional model that is of the target object and that is displayed in the first interface or the second interface is a static multi-dimensional model. The multi-dimensional model may be driven by a third operation input by the user to perform some actions, for example, turning, dancing, and doing exercise.

Optionally, in a possible implementation, the multi-dimensional model that is of the target object and that is displayed in the first interface or the second interface in response to the second operation is a dynamic multi-dimensional model.

In this application, the electronic device displays the multi-dimensional model of the target object instead of a planar two-dimensional object, so that an effect of displaying the target object on the electronic device is improved. In this way, the user views the multi-dimensional model of the target object. Compared with viewing a two-dimensional target object by the user, this method can enhance an authentic feeling of the user when viewing the target object, and improve user experience. Further, the model construction parameters required for constructing the multi-dimensional model are model construction parameters that match the object mask corresponding to the target object. Therefore, the multi-dimensional model constructed by using the model construction parameters is closer to the target object. This further improves a display effect of the target object.

With reference to the second aspect, in some implementations of the second aspect, the processing unit is specifically configured to: obtain the object mask (mask) corresponding to the target object; obtain a basic model (which may also be referred to as a basic model) corresponding to an attribute of the target object, and obtain, based on the basic model, model construction parameters required for constructing a model of the target object; perform warp (warp) processing on the model construction parameters to obtain the model construction parameters that match the object mask; and construct (for example, generate) the multi-dimensional model (for example, a three-dimensional model) based on the model construction parameters that match the object mask.

The object mask indicates a region that is in the target image and that is surrounded by a body contour of the target object. The basic model is a multi-dimensional model (for example, a three-dimensional model) that has been constructed in advance. Optionally, a polygon mesh model may be used as the basic model, for example, a triangle mesh model.

In this application, the model construction parameters required for constructing the model of the target object are obtained based on the basic model. Warp processing is performed on the model construction parameters to obtain the model construction parameters that match the object mask. The multi-dimensional model is constructed based on the model construction parameters that match the object mask. It may be learned that, in this application, warp processing is performed on the model construction parameters corresponding to the basic model to match the object mask of the target object, so as to construct the multi-dimensional model of the target object by using the matched model construction parameters. This can reduce a computing amount required for constructing the model and save computing resources.

It should be noted that the target object in the target image may be a person, an animal, a sculpture, or the like. Basic models of different objects may vary greatly. For example, a person model and an animal model vary greatly, a male model and a female model also vary greatly, and an adult model and a child model also vary greatly. Therefore, in this application, when the basic model is selected, the basic model corresponding to the attribute of the target object is selected. The attribute of the target object includes but is not limited to an age, a gender, a body shape, and a posture (for example, standing, sitting, and running). For example, if the target object is a male, a model corresponding to the male is selected. If the target object is a child, a model corresponding to the child is selected. If the target object is very fat, a model corresponding to a fat person is selected. It should be understood that, when the basic model is selected, one or more attributes of the target object may be considered.

Optionally, in a possible implementation, the model construction parameters may include a depth map (depth map) of a first surface of the basic model, a semantic map of the first surface of the basic model, a depth map (depth map) of a second surface of the basic model, and a semantic map of the second surface of the basic model. The first surface and the second surface are surfaces of the basic model. For example, the first surface may be a front side of the basic model, and the second surface may be a back side of the basic model.

It should be understood that, when the basic model includes a plurality of surfaces, a depth map and a semantic map of each surface may be obtained.

Optionally, in a possible implementation, the depth map and the semantic map of each surface of the basic model are obtained by rendering (rendering) each surface of the basic model.

The depth map of the first surface indicates depth information (namely, information about a distance between each vertex on the first surface and the camera) corresponding to each vertex on the first surface of the basic model, and the depth map of the second surface indicates depth information (namely, information about a distance between each vertex on the second surface and the camera) corresponding to each vertex on the second surface of the basic model. The semantic map of the first surface indicates semantic information (namely, information about a position of each vertex on the first surface on a body) corresponding to each vertex on the first surface of the basic model, and the semantic map of the second surface indicates semantic information (namely, information about a position of each vertex on the second surface on the body) corresponding to each vertex on the second surface of the basic model.

Although the attribute of the target object is considered when the basic model is selected, there may be some differences between the basic model and the target object, for example, a weight difference, a posture difference, and a height difference. Therefore, after the model construction parameters of the basic model are obtained, the model construction parameters are not directly used to construct the model. Instead, warp (warp) processing is performed on the model construction parameters, so that warped model construction parameters match the object mask. Warp processing may include but is not limited to translation transformation, affine transformation, rotation transformation, and distortion transformation. In this way, the model generated based on the warped model construction parameters is closer to the target object.

The three-dimensional model of the target object may be generated only by using a single target image and the basic model. Compared with an existing model reconstruction technology, target images at a plurality of angles of view do not need to be collected, and a video in a same scene does not need to be collected. Instead, only a single target image needs to be collected, the model construction parameters of the basic model are adjusted to match the object mask of the target object, and the model is generated based on the matched model construction parameters. Therefore, preparation working for model reconstruction is reduced. In addition, a computing amount of model reconstruction is reduced, and computing resources are saved. Further, because the model construction parameters for generating the model match the object mask of the target object, the generated multi-dimensional model matches the object mask of the target object. This improves a modeling effect.

With reference to the second aspect, in some implementations of the second aspect, the processing unit is further configured to: adjust the basic model based on the object mask, so that a body shape of an adjusted basic model adaptively matches a body shape of the target object; or obtain joint information corresponding to the target object, and adjust the basic model based on the object mask and the joint information, so that a body shape and a posture of an adjusted basic model adaptively match a body shape and a posture of the target object, where correspondingly, the model construction parameters required for constructing the model of the target object are obtained based on the adjusted basic model.

An adjustment process may be executed through iterative optimization. The parameters of the basic model are continuously adjusted based on the object mask, so that the body shape (for example, a height and a weight) of the adjusted basic model is as close as possible to the body shape of the target object. Alternatively, the parameters of the basic model are continuously adjusted based on the object mask and the joint information, so that the posture of the adjusted basic model is as close as possible to the posture of the target object (for example, a joint position in the adjusted basic model is closer to a joint position of the target object, or a length ratio of a trunk to a leg of the adjusted basic model is closer to a length ratio of a trunk to a leg of the target object), and the body shape (for example, a height and a weight) of the adjusted basic model is as close as possible to the body shape of the target object.

A process in which the basic model is adjusted based on the object mask is used as an example. In this implementation, a degree at which the body shape of the basic model matches the body shape of the target object is used as an iteration termination condition. In an example iteration process, the parameters of the basic model are continuously adjusted. If a degree at which a body shape of a basic model obtained after the parameters are adjusted matches the body shape of the target object is less than a matching threshold, the parameters of the basic model continue to be adjusted. If a degree at which a body shape of a basic model obtained after the parameters are adjusted matches the body shape of the target object is higher than or equal to a matching threshold, the iteration process is stopped. In another example iteration process, the parameters of the basic model are continuously adjusted, and the iteration process is stopped when a degree at which the body shape of the adjusted basic model matches the body shape of the target object no longer increases.

With reference to the second aspect, in some implementations of the second aspect, the processing unit is further configured to: adjust the basic model N times based on the object mask, so that a degree at which a body shape of a basic model adjusted for an n^{th} time matches a body shape of the target object is better than a degree at which a body shape of a basic model adjusted for an m^{th} time matches the body shape of the target object; or obtain joint information corresponding to the target object, and adjust the basic model N times based on the object mask and the joint information, so that a degree at which a body shape and a posture of a basic model adjusted for an n^{th} time match a body shape and a posture of the target object is better than a degree at which a body shape and a posture of a basic model adjusted for an m^{th} time match the body shape and the posture of the target object, where N represents a preset quantity of adjustment times (for example, a maximum quantity of adjustment times), N, n, and m are positive integers, n is greater than m, and n and m are less than or equal to N; and correspondingly, the model construction parameters required for constructing the model of the target object are obtained based on the basic model adjusted N times.

In this implementation, the maximum quantity of adjustment times is used as an iteration termination condition. An example in which the maximum quantity of adjustment times is N is used. In this way, the degree at which the body shape of the basic model adjusted for the n^{th} time matches the body shape of the target object is better than the degree at which the body shape of the basic model adjusted for the m^{th} time matches the body shape of the target object, or the degree at which the body shape and the posture of the basic model adjusted for the n^{th} time match the body shape and the posture of the target object is better than the degree at which the body shape and the posture of the basic model adjusted for the m^{th} time match the body shape and the posture of the target object. It should be understood that, in an iteration process, it cannot be ensured that a degree at which the body shape and the posture of the basic model match the body shape and the posture of the target object is better in each time of adjustment, but the body shape and the posture of the adjusted basic model are closer to the body shape and the posture of the target object in terms of an overall trend, where the n^{th} time of adjustment is after the m^{th} time of adjustment, and the n^{th} time of adjustment may not be limited to next adjustment adjacent to the m^{th} time of adjustment.

Before the model is generated, first, the basic model is adjusted by using the object mask, so that the body shape and/or the posture of the adjusted basic model are/is as close as possible to the body shape and/or the posture of the target object. Then, the model construction parameters are extracted based on the adjusted basic model, and warp processing is performed on the model construction parameters based on the object mask, so that the warped model construction parameters highly match the object mask. Therefore, a modeling effect is improved.

With reference to the second aspect, in some implementations of the second aspect, the processing unit is specifically configured to: obtain the attribute of the target object based on the target image, where the attribute includes at least one of the following: a gender, an age, a body shape, and a posture; and select the basic model (which may also be referred to as a template model) corresponding to the attribute of the target object from a basic model set (which may also be referred to as a template model set), where the basic model set includes a plurality of basic models, and the basic models correspond to different attributes.

The basic model set may include a plurality of basic models, and each basic model corresponds to one or more attributes. For example, an attribute corresponding to a basic model 1 is a male, an adult, and a fat person, an attribute corresponding to a basic model 2 is a female and a child, an attribute corresponding to a basic model 3 is an elder and a thin person, an attribute corresponding to a basic model 4 is a cat, and an attribute corresponding to a basic model 5 is a dog. In this way, the target image may be first analyzed and identified to determine the attribute of the target object. Then, a basic model having a highest matching degree with the attribute of the target object is selected from the basic model set based on the attribute of the target object.

The selected basic model in this application is selected based on the attribute of the target object. Therefore, the multi-dimensional model obtained through modeling processing based on the basic model can effectively express the target object. This improves a modeling effect.

With reference to the second aspect, in some implementations of the second aspect, the basic model includes a plurality of body parts, each body part includes a plurality of vertices, a range of semantic information corresponding to vertices in different body parts is different, and semantic information corresponding to any two vertices in a same body part is different; or the basic model includes a plurality of object parts, each object part includes a plurality of vertices, a range of semantic information corresponding to vertices in different object parts is different, and semantic information corresponding to any two vertices in a same object part is different.

The target object may include a plurality of object parts, and each object part is a region of the target object. It should be understood that object part division manners corresponding to different target objects may be different.

A human body is used as an example. The target object is divided into a plurality of body parts, for example, a head, a trunk, a left arm, a right arm, a left leg, a right leg, a left hand, and a right hand. The basic model in this application is different from an existing human model. In the existing human model, semantic information is assigned to each body part. For example, semantic information corresponding to the head is 1, namely, semantic information corresponding to each vertex in the head is 1, and semantic information corresponding to the trunk is 2, namely, semantic information corresponding to each vertex in the trunk is 2. In this application, a range of semantic information corresponding to vertices in different body parts in the basic model is different, and semantic information corresponding to any two vertices in a same body part is different, so that semantic information corresponding to any two vertices in the basic model is different.

In this application, semantic information corresponding to any two vertices in the basic model is different, so that vertices in the basic model can accurately correspond to different positions on the target object. In other words, the basic model can distinguish between different positions on the target object, so that the basic model describes the target object more accurately. In this way, subsequent modeling processing is performed based on a basic model that has accurate semantic information. This can improve a modeling effect.

With reference to the second aspect, in some implementations of the second aspect, the model construction parameters include a depth map (depth map) of a first surface of the basic model, a semantic map of the first surface of the basic model, a depth map (depth map) of a second surface of the basic model, and a semantic map of the second surface of the basic model.

The depth map of the first surface indicates depth information (namely, information about a distance between each vertex on the first surface and the camera) corresponding to each vertex on the first surface of the basic model, and the depth map of the second surface indicates depth information (namely, information about a distance between each vertex on the second surface and the camera) corresponding to each vertex on the second surface of the basic model. The semantic map of the first surface indicates semantic information (namely, information about a position of each vertex on the first surface on a body) corresponding to each vertex on the first surface of the basic model, and the semantic map of the second surface indicates semantic information (namely, information about a position of each vertex on the second surface on the body) corresponding to each vertex on the second surface of the basic model.

With reference to the second aspect, in some implementations of the second aspect, the processing unit is specifically configured to: perform warp processing on the depth map of the first surface based on the object mask and the semantic map of the first surface, so that a warped depth map of the first surface matches the object mask; and perform warp processing on the depth map of the second surface based on the object mask and the semantic map of the second surface, so that a warped depth map of the second surface matches the object mask.

The front side is used as an example. Because a front depth map and a front semantic map are obtained by rendering (rendering) the front side of the basic model, pixels in the front depth map are in a one-to-one correspondence with pixels in the front semantic map. In other words, pixels at same positions in the front depth map and the front semantic map correspond to a same vertex in the basic model. Therefore, a correspondence between each pixel in the front depth map and each pixel in the object mask may be determined by using the front semantic map. In this way, warp processing is performed on the front depth map based on the correspondence between each pixel in the front depth map and each pixel in the object mask, so that a warped front depth map matches the object mask.

It should be understood that an adjustment process of a back depth map is similar to the adjustment process of the front depth map.

It should be noted that, when warp processing is performed on the model construction parameters, warp processing may be performed only on the front depth map and the back depth map, and warp processing is not performed on the front semantic map and a back semantic map. It can be understood that, the pixels in the front depth map are in a one-to-one correspondence with the pixels in the front semantic map, and pixels in the back depth map are in a one-to-one correspondence with pixels in the back semantic map. Therefore, after warp processing is performed on the front depth map and the back map, semantic information of each pixel in a front depth map and a back depth map that are obtained after warp processing may be determined based on the foregoing correspondence.

With reference to the second aspect, in some implementations of the second aspect, the processing unit is specifically configured to: perform mesh processing on the depth map, of the first surface, that matches the object mask and that is obtained after warp processing, to obtain mesh (mesh) information of the first surface; perform mesh processing on the depth map, of the second surface, that matches the object mask and that is obtained after warp processing, to obtain mesh (mesh) information of the second surface; and fuse the mesh information of the first surface with the mesh information of the second surface to obtain the multi-dimensional model of the target object.

Optionally, in a possible implementation, mesh processing may be performed by using a Poisson (possion) reconstruction technology.

Optionally, in a possible implementation, the processing unit is further configured to: perform optimization adjustment on the mesh information of the first surface based on the semantic map of the first surface, and perform optimization adjustment on the mesh information of the second surface based on the semantic map of the second surface. In this way, a model obtained by fusing the mesh information, that is of the first surface and that is obtained after optimization adjustment, with the mesh information, that is of the second surface and that is obtained after optimization adjustment, better matches the target object. This improves a modeling effect.

With reference to the second aspect, in some implementations of the second aspect, the processing unit is specifically configured to: perform joint extraction on the target object in the target image to obtain the joint information corresponding to the target object; and segment the target image based on the joint information of the target object, to obtain the object mask corresponding to the target object.

An example in which the target object is a person is used. The extracted joint information includes but is not limited to a head, a neck, a right shoulder, a right elbow, a right wrist, a left shoulder, a left elbow, a left wrist, a right hip joint, a right knee, a right ankle, a left hip joint, a left knee, a left ankle, and a body center point. The target object in the icon image is segmented based on the extracted joint information. This can improve image segmentation accuracy, so that the object mask that is of the target object and that is obtained through segmentation is more accurate.

With reference to the second aspect, in some implementations of the second aspect, the processing unit is further configured to: extract texture information of the target object from the target image, and fuse the texture information with the model of the target object, so that the multi-dimensional model displayed in the first interface or the second interface is a multi-dimensional model obtained after fusion.

Optionally, the texture information includes but is not limited to skin information and clothing information. In other words, texture information such as skin and clothing of a person is extracted from the target image, a texture mapping relationship is established between the texture information and the generated model, the texture information of the target object is fused with the generated multi-dimensional model based on the texture mapping relationship, to obtain a multi-dimensional model obtained after the texture information is fused, and the multi-dimensional model obtained after fusion is displayed in the first interface or the second interface, so that the multi-dimensional model looks more authentic, and a display effect is improved.

With reference to the second aspect, in some implementations of the second aspect, the detection unit is further configured to detect a third operation performed by the user in the first interface or the second interface, where the third operation is used to indicate a dynamic effect of the model; and the processing unit is further configured to display a dynamic multi-dimensional model in the first interface or the second interface in response to the third operation, where the dynamic multi-dimensional model is obtained by adding the dynamic effect to the multi-dimensional model obtained after fusion.

Optionally, the first interface or the second interface may further include at least one interactive control. Each interactive control may correspond to one dynamic effect. For example, the interactive control may be used to rotate the multi-dimensional model leftward or rightward. Certainly, the multi-dimensional model may be rotated in another direction. The interactive control may be used to add some rendering effects to the model, for example, a raindrop effect and an effect of floating banknotes in the air. Alternatively, the interactive control may be used to add some animation effects to the model, for example, drive the model to perform some actions, for example, dancing and doing exercise. After detecting the third operation input by the user by using the interactive control, the electronic device adds a dynamic effect corresponding to the interactive control to the multi-dimensional model, to obtain a dynamic multi-dimensional model. In this way, the electronic device displays the dynamic multi-dimensional model in the first interface or the second interface, so that the user views the multi-dimensional model with the dynamic effect. This further improves viewing experience of the user.

According to a third aspect, this application provides an image display device, including a display screen, a camera, one or more processors, a memory, a plurality of application programs, and one or more computer programs. The one or more computer programs are stored in the memory, and the one or more computer programs include instructions. When the instructions are executed by the device, the device is enabled to perform the method in any one of the first aspect or the possible implementations of the first aspect.

It should be noted that in this application, the image display device has the display screen. The display screen may be a touchscreen, a flexible screen, a curved screen, or a screen in another form. The display screen of the electronic device has a function of displaying an image. A specific material and a shape of the display screen are not limited in this application.

Optionally, the image display device in this application may be a terminal device such as a mobile phone.

According to a fourth aspect, this application provides an image display device, including a storage medium and a central processing unit. The storage medium may be a non-volatile storage medium, and the storage medium stores a computer-executable program. The central processing unit is connected to the non-volatile storage medium, and executes the computer-executable program to implement the method according to any one of the first aspect or the possible implementations of the first aspect.

According to a fifth aspect, this application provides a chip. The chip includes a processor and a data interface. The processor reads, through the data interface, instructions stored in a memory, to perform the method according to any one of the first aspect or the possible implementations of the first aspect.

Optionally, in an implementation, the chip may further include the memory. The memory stores instructions. The processor is configured to execute the instructions stored in the memory. When the instructions are executed, the processor is configured to perform the method according to any one of the first aspect or the possible implementations of the first aspect.

According to a sixth aspect, this application provides a computer-readable storage medium. The computer-readable storage medium stores program code to be executed by a device. The program code includes instructions for performing the method according to any one of the first aspect or the possible implementations of the first aspect.

According to a seventh aspect, this application provides a computer program product. The computer program product is executed by a processor. When the computer program product is executed by the processor, the method in any one of the first aspect or the possible implementations of the first aspect is implemented.

### BRIEF DESCRIPTION OF DRAWINGS

FIG. 1 is a schematic diagram of a system architecture according to an embodiment of this application;
FIG. 2 is a schematic diagram of a three-dimensional model according to an embodiment of this application;
FIG. 3 is a schematic flowchart of an image display method according to an embodiment of this application;
FIG. 4(a) and FIG. 4(b) are a schematic diagram of a display interface according to an embodiment of this application;
FIG. 5(a) to FIG. 5(c) are a schematic diagram of a display interface of "Gallery" according to an embodiment of this application;
FIG. 6 is a schematic diagram of a display interface according to an embodiment of this application;
FIG. 7(a) to FIG. 7(c) are a schematic diagram of a display interface of "Gallery" according to an embodiment of this application;
FIG. 8 is a schematic flowchart of a modeling processing method according to an embodiment of this application;
FIG. 9(a) to FIG. 9(d) are a schematic diagram of a target image and an object mask according to an embodiment of this application;
FIG. 10(a) to FIG. 10(c) are a schematic diagram of a basic model and model construction parameters according to an embodiment of this application;
FIG. 11(a) and FIG. 11(b) are a schematic diagram of an obtained model of a target object according to an embodiment of this application;
FIG. 12 is a schematic flowchart of a modeling processing method according to an embodiment of this application;
FIG. 13(a) to FIG. 13(h) are a schematic diagram of a modeling processing process according to an embodiment of this application;
FIG. 14(a) and FIG. 14(b) are a schematic diagram of semantic information of a basic model according to an embodiment of this application;
FIG. 15 is a schematic diagram of a method for converting a 2D image into a 3D image according to an embodiment of this application;
FIG. 16 is a schematic diagram of a 3D video transmission method according to an embodiment of this application;
FIG. 17 is a schematic diagram of a structure of an image display device according to an embodiment of this application; and
FIG. 18 is a schematic diagram of a structure of an electronic device according to an embodiment of this application.

### DESCRIPTION OF EMBODIMENTS

The following describes technical solutions of this application with reference to accompanying drawings.

In an image display method provided in the embodiments of this application, an object in a two-dimensional image can be converted into a three-dimensional model or a model in more dimensions, and the model can be displayed, to "wake up" the object in the two-dimensional image, so that image display is more authentic and interesting. The image display method provided in the embodiments of this application can be applied to shooting, video recording, a video call, human-computer interaction, and a scenario in which an image needs to be processed, an image needs to be displayed, and low-level or high-level visual processing needs to be performed on an image, for example, wakeup of an object in an image or wakeup of a person in a video call. The following is briefly described by using wakeup of an object in an image and wakeup of a person in a video call as an example.

### Wakeup of an object in an image

When shooting is performed by using a camera, a terminal device, or another intelligent electronic device, a shot image is a two-dimensional image. To display a more authentic and interesting image, after shooting, the image display method in the embodiments of this application may be used to wake up and display an object (for example, a person, an animal, or a sculpture) in the two-dimensional image, namely, convert the object in the image into a three-dimensional model. Further, the three-dimensional model may be driven to move, so that a user views a dynamic three-dimensional model. In the image display method in the embodiments of this application, an image display effect can be improved, so that image display is more authentic and interesting.

### Wakeup of a person in a video call

When a user is on a video call by using an intelligent electronic device, a person in the video that is viewed by the user is two-dimensional. In the image display method in the embodiments of this application, a person in each image frame is converted into a three-dimensional model, so that the user views a three-dimensional model of the person in a video call process, and the video call of the user is more authentic.

For ease of understanding, the following first describes related terms and related concepts that may be used in the embodiments of this application.

### (1) Model, mesh, and texture

The model is a description of an object in a strictly defined language or data structure. The model in the embodiments of this application may be a three-dimensional model or a model in more dimensions. The three-dimensional model is used as an example. The three-dimensional model is a polygon representation of an object, and is usually displayed by using a computer or another video device. The object represented by using the three-dimensional model may be an entity in a real world or an imaginary object. Any object that exists in the physical natural world may be represented by a three-dimensional model. The three-dimensional model may be generated by using three-dimensional modeling tool software, or may be generated by using a three-dimensional modeling algorithm.

The three-dimensional model is invisible, and may be rendered at different levels of detail based on a simple wire frame or may be shaded (shaded) by using different methods. However, many three-dimensional models are covered with textures, and a process of placing the texture on the three-dimensional model is referred to as texture mapping. The texture is an image, but may allow the model to be more detailed and look more authentic. For example, if a three-dimensional model of a person has skin and clothing textures, the model looks more authentic than a simple monochrome model or a wire-frame model. In addition to the texture, some other effects can also be used for the three-dimensional model, so that the model is more authentic. For example, a surface normal may be adjusted to implement lighting effect of the model, and a bump mapping method and some other stereoscopic rendering techniques may be used, so that the model is more authentic. The three-dimensional model is often animated, for example, a large quantity of three-dimensional models are used in feature films and computer and video games. To facilitate animation, additional data is usually added to the model, for example, some human or animal three-dimensional models have a complete skeletal system. In this way, during movement, the model looks more authentic, and movement can be controlled by using a joint and a bone.

The three-dimensional model includes a mesh (mesh) and a texture (texture). The mesh includes a plurality of point clouds of an object, and a three-dimensional model mesh is formed by using the point clouds. The point cloud includes three-dimensional coordinates (XYZ), laser reflection intensity (intensity), and color information, and is finally drawn into a mesh. The mesh usually includes a triangle, a quadrilateral, or another simple convex polygon. In this way, a rendering process can be simplified. However, the mesh may also include an object including an ordinary polygon with a void. The texture includes a texture on a surface of an object in a general sense (namely, a groove that enables the surface of the object to be rough), and also includes a color pattern on a smooth surface of the object, and this process is also referred to as texture mapping. When the texture is mapped to a surface of a model in a specified manner, the model can look more authentic. An image obtained by shooting an object is processed to obtain a mesh corresponding to the object, and texture mapping is performed on the mesh to finally form a three-dimensional model.

### (2) Depth map (depth map)

One of important tasks of a computer vision system is to obtain a distance between each point in a scene and a camera. The distance between each point in the scene and the camera may be represented by using a depth map, that is, each pixel value of the depth map represents a distance between a point in the scene and the camera. A technology in which a machine vision system obtains a scene depth map may fall into two types: passive ranging sensing and active ranging sensing. For passive ranging sensing, the vision system receives light energy emitted or reflected from a scene, to form a light energy distribution function related to the scene, namely, a grayscale image, and then recovers depth information of the scene based on these images. For active ranging sensing, the vision system first emits energy to a scene, and then receives reflected energy obtained after the scene reflects the emitted energy. The active ranging sensing system is also referred to as a ranging imaging system. A most obvious feature of the active ranging sensing compared with passive ranging sensing is that a device itself needs to emit energy to complete a collection of depth information. In this way, obtaining of the depth map is independent of obtaining of a color image. An active ranging sensing method mainly includes time of flight (time of flight, TOF), structured light, laser scanning, and the like.

### (3) Semantic map

Semantics of an image is divided into a visual layer, an object layer, and a concept layer. The visual layer is commonly understood as an underlying layer, namely, a color, a texture, a shape, and the like. These features are referred to as underlying feature semantics. The object layer is an intermediate layer, and usually includes an attribute feature and the like, namely, a state of an object at a moment. The concept layer is a high layer, and is a layer that is closest to human understanding and that is expressed in the image. Generally, for example, an image includes sand, blue sky, and sea water. The visual layer is division of blocks. The object layer is the sand, the blue sky, and the sea water. The concept layer is a beach that is semantics expressed by the image.

### (4) Mask (mask)

In semiconductor manufacturing, photolithography is used in process steps of many chips. A graphic "film" used to perform these steps is referred to as a mask (also referred to as a "mask"). The mask is used to block an opaque graphic template in a selected region on a silicon wafer, so that subsequent corrosion or diffusion affects only a region outside the selected region. In the image processing field, a mask is similar to the foregoing mask, and is used to block a to-be-processed image (all or partially) by using a selected image, graphic, or object, to control an image processing region or an image processing process. The mask has the following four functions. (1) Extraction of a region of interest: A region of interest image is obtained by multiplying a pre-produced region of interest mask by a to-be-processed image, where an image value in the region of interest remains unchanged, and an image value outside the region is 0. (2) Shielding function: The mask is used to shield some regions on an image, so that the regions do not participate in processing or do not participate in computation of a processing parameter, or only processing or counting is performed in the shielded regions. (3) Structure feature extraction: A similarity variable or an image matching method is used to detect and extract a structure feature that is in an image and that is similar to the mask. (4) Production of an image having a special shape.

### (6) Warp (warp)

Warp (warp) may also be referred to as distortion. A type of warp includes but is not limited to scaling, translation, distortion, rotation, stretching, and compression.

### (7) Rendering

In computer drawing, rendering is a process of generating an image from a model by using software. The model is a description of a three-dimensional object in a strictly defined language or data structure, and includes geometry, viewpoint, texture, and lighting information. A process in which a model in a three-dimensional scene is projected into a two-dimensional digital image based on a specified environment, light, material, and rendering parameter is referred to as rendering.

### (8) Image segmentation

Image segmentation is a technology and a process of segmenting an image into several particular regions having unique properties, and extracting an object of interest. Image segmentation is a key step from image processing to image analysis. An existing image segmentation method mainly falls into the following types: a threshold-based segmentation method, a region-based segmentation method, an edge-based segmentation method, a specified-theory-based segmentation method, and the like. From a mathematical perspective, image segmentation is a process of segmenting a digital image into non-intersecting regions. The image segmentation process is also a marking process, that is, a same number is assigned to pixels belonging to a same region.

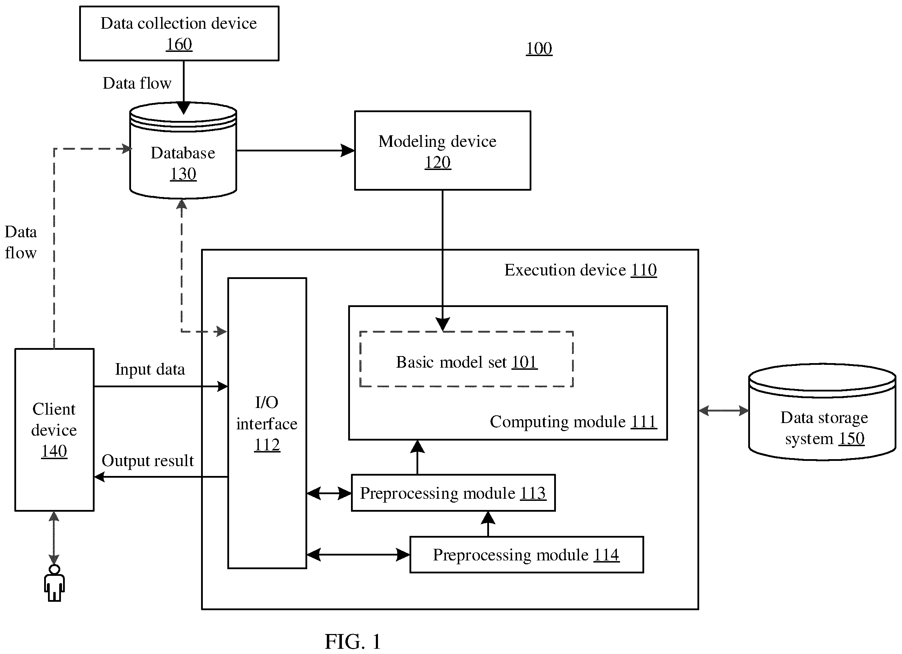

As shown in FIG. 1, an embodiment of this application provides a system architecture 100. In FIG. 1, a data collection device 160 is configured to collect modeling data. In this embodiment of this application, the modeling data includes data corresponding to objects (persons, animals, sculptures, and the like) having different attributes. The modeling data may be image data, point cloud data, parameter data, and the like.

After collecting the modeling data, the data collection device 160 stores the modeling data into a database 130, and a modeling device 120 constructs a model based on the modeling data maintained in the database 130, to obtain one or more basic models. These basic models form a basic model set 101.

The basic model set 101 can be used to implement the image display method in the embodiments of this application, that is, perform related preprocessing on a to-be-processed image to obtain preprocessed data. The preprocessed data and the basic model in the basic model set 101 are used for computation, to obtain a multi-dimensional model obtained after processing in this application.

It should be noted that, in actual application, the modeling data maintained in the database 130 may not all be collected by the data collection device 160, or may be received and obtained from another device. In addition, it should be noted that the modeling device 120 does not necessarily construct a model fully based on the modeling data maintained in the database 130, and may obtain modeling data from a cloud or another place to construct a model. The foregoing descriptions should not be used as a limitation on this embodiment of this application.

The basic model set 101 obtained through modeling by the modeling device 120 may be applied to different systems or devices, for example, an execution device 110 shown in FIG. 1. The execution device 110 may be a terminal, for example, a mobile phone terminal, a tablet computer, a laptop computer, augmented reality (augmented reality, AR)/virtual reality (virtual reality, VR), or a vehicle-mounted terminal, or may be a server, a cloud, or the like. In FIG. 1, the execution device 110 is provided with an input/output (input/output, I/O) interface 112, and is configured to exchange data with an external device. A user may input data to the I/O interface 112 by using a client device 140. The input data in this embodiment of this application may include a to-be-processed image input by using the client device.

A preprocessing module 113 and a preprocessing module 114 are configured to perform preprocessing based on the input data (for example, the to-be-processed image) received by the I/O interface 112. In this embodiment of this application, the preprocessing module 113 and the preprocessing module 114 may not exist (or only one of the preprocessing module 113 and the preprocessing module 114 exists). A computing module 111 is directly used to process the input data.

In a process in which the execution device 110 performs preprocessing on the input data or the computing module 111 of the execution device 110 performs related processing such as computing, the execution device 110 may invoke data, code, and the like in a data storage system 150 for corresponding processing, and may also store data, instructions, and the like obtained through corresponding processing into the data storage system 150.

Finally, the I/O interface 112 returns a processing result, for example, the processed image, to the client device 140, to provide the processed image to the user.

It should be noted that the modeling device 120 may generate a corresponding basic model set 101 based on different modeling data for different targets or tasks. The corresponding basic model set 101 may be used to implement the foregoing targets or complete the foregoing tasks, to provide a required result for the user. For example, in this application, a model of a target object in an image may be provided for the user.

It should be further understood that in the embodiments of this application, "first", "second", "third", and the like are merely intended to indicate different objects, but do not represent other limitations on the indicated objects.

The following uses a three-dimensional model as an example to describe a structure, a representation manner, and a possible related processing method of a model in the embodiments of this application.

The three-dimensional model is a polygon mesh obtained by polygonizing an object, and is also referred to as a polygon model. In a polygon mesh model, a triangle mesh model is attractive for simplicity thereof, and many operations are easier for the triangle mesh model than a general polygon mesh model. Any polygon mesh can be converted into a triangle mesh. The following is described by using the triangle mesh model as an example.

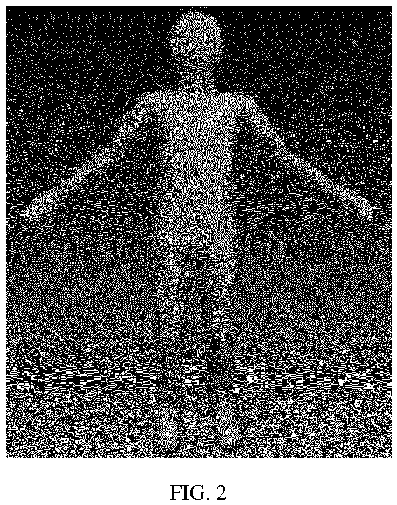

FIG. 2 is a schematic diagram of a three-dimensional model according to an embodiment of this application. As shown in FIG. 2, a three-dimensional model of a human body is used as an example, and the human body is divided into a plurality of triangles. A triangle mesh model includes the following information:
Vertex (vertex): Each triangle has three vertices, and each vertex may be shared with another triangle.
Edge (edge): An edge connects two vertices, and each triangle has three edges.
Face (face): One face is surrounded by three edges of each triangle, and the face may be represented by using a vertex list or an edge list.
Normal (normal): The normal indicates a direction of a face. When the normal faces outside, the face is a front side, and when the normal faces inside, the face is a back side. There is also a normal at a vertex, and a smooth appearance of a triangle can be controlled by averaging and scattering normals at vertices.

In a representation manner of the triangle mesh model, a vertex index representation manner may be used. In the vertex index representation manner, two lists need to be maintained: a vertex list (vertex buffer) and an indexed triangle list (index buffer). Each vertex includes a 3D position, and may also include additional data such as a texture mapping coordinate, a surface normal vector, and a lighting value. Each indexed triangle includes indexes of three vertices. Usually, an order that vertices in each triangle are listed is very important because a front side and a back side need to be considered. When the triangle is viewed from the front side, the three vertices are listed in a clockwise direction. In practice, a triangle mesh class includes a series of methods for accessing and maintaining the vertex list and the triangle list. It should be noted that adjacency information in the indexed triangle list is implicit. For example, although edge information is not stored explicitly, a shared edge may be found by searching the indexed triangle list. This manner can save much space.

The vertex index representation manner is sufficient for a basic application, but some improvements may be further made to implement some operations more efficiently. Because the adjacency information is not explicitly expressed in the vertex index representation manner, the adjacency information needs to be obtained by searching the triangle list. Therefore, as an improvement, an edge index representation manner may be further used. To be specific, an edge list may be maintained, each edge is defined by two endpoints, and a list of triangles that share the edge is also maintained. In this way, the triangle may be considered as a list of three edges rather than three vertices. In other words, an edge index is used in the edge index representation manner. An extension of this idea is referred to as a "winged edge" model that stores, for each vertex, an index of an edge that uses the vertex.

However, most graphics cards do not directly support the vertex index representation manner. When a triangle is rendered, three vertices are usually submitted at the same time. In this way, a shared vertex is submitted a plurality of times, and is submitted once for a triangle in which the vertex is used. Because data transmission between memory and graphics hardware is a bottleneck, many APIs and hardware support a special triangle mesh format to reduce a transmission amount. A basic idea is to sort vertices and faces, so that an existing triangle does not need to be transmitted again. The following methods are mainly included: vertex caching, a triangle strip, a triangle fan, and the like. Details are not described in this application.

In the triangle mesh model, additional information may also be stored at a triangle level or a vertex level, for example, a texture mapping coordinate, a surface normal vector, and a lighting value. (1) Texture mapping is a process of applying a bitmap (which is briefly referred to as a "texture map" or a "texture") to a surface of a polygon. Herein, only a highly simplified explanation is provided: A user expects to apply a 2D texture to the surface of the polygon while considering a direction of the polygon in camera space. A 2D texture mapping coordinate needs to be computed for each pixel that needs to be rendered on the polygon, and these coordinates are used to index into the texture map, to color a corresponding pixel. Usually, the texture mapping coordinate is stored at the vertex level, and coordinates of remaining points in a face of a triangle are computed through interpolation. (2) In many application programs, a surface normal vector is required for each point on a mesh. The surface normal vector may be used to compute lighting, perform backface culling, simulate an effect that a particle "bounces" off a surface, speed up collision detection by considering only a front side, and the like. The surface normal vector may be stored at the triangle level, the vertex level, or both of the two levels. (3) Another type of information maintained at the vertex level is a lighting value. The lighting value is interpolated across a surface, and a typical method is Gouraud shading. In some cases, only a normal vector is stored at the vertex level, and the lighting value is dynamically computed during rendering.

A triangle mesh is a list of vertices and triangles. A series of basic operations of the triangle mesh are results of performing the basic operations in a vertex-by-vertex manner and a triangle-by-triangle manner. Most notably, both rendering and transformation belong to these operations. For example, when a triangle mesh needs to be rendered, rendering needs to be performed in a triangle-by-triangle manner. When transformation (for example, rotation or scaling) needs to be applied to the triangle mesh, transformation needs to be performed in a vertex-by-vertex manner. In actual application, efficiency may be improved by using the following optimization methods: (1) vertex welding, (2) face detachment, (3) edge collapse, (4) mesh decimation, and the like.

Currently, a terminal device can display a two-dimensional image and a video that includes two-dimensional image frames. With development of an augmented reality (augmented reality, AR) technology and a virtual reality (virtual reality, VR) technology, the user expects the terminal device to be capable of displaying a three-dimensional scene. A key step is to reconstruct a target object in the two-dimensional image to obtain a three-dimensional model of the target object. A common three-dimensional reconstruction technology mainly includes three-dimensional reconstruction based on a plurality of angles of view and three-dimensional reconstruction based on a video. A three-dimensional model of a human body is used as an example. In three-dimensional reconstruction based on a plurality of angles of view, a plurality of cameras synchronously collect human body images from a plurality of angles of view, and then the three-dimensional model of the human body is obtained based on the collected human body images at the plurality of angles of view. In three-dimensional reconstruction based on a video, a single camera records a segment of human body video, and a three-dimensional model of the human body is obtained by computing a relationship between video frames. However, a plurality of human body images need to be collected in both three-dimensional reconstruction based on a plurality of angles of view and three-dimensional reconstruction based on a video. As a result, operations are inconvenient, and a large amount of computing needs to be performed on the plurality of human body images. Consequently, a large quantity of computing resources are consumed.

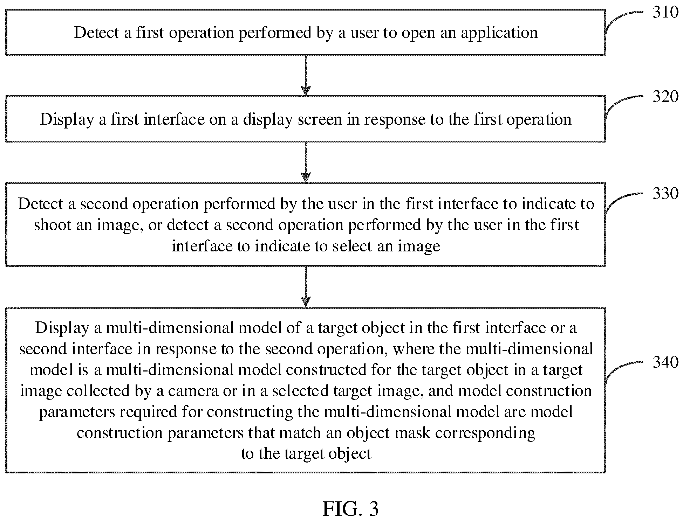

The following describes the image display method in this embodiment of this application in detail with reference to FIG. 3. The method is performed by an image display device. The image display device may be an electronic device having an image display function. The electronic device may include a display screen and a camera. The electronic device may be specifically a mobile terminal (for example, a smartphone), an augmented reality (augmented reality, AR) device, a virtual reality (virtual reality, VR) device, a computer, a personal digital assistant, a wearable device, a vehicle-mounted device, an Internet of things device, or another device that can display an image.

The method shown in FIG. 3 includes step 310 to step 340. The following describes the steps in detail.

Step 310: Detect a first operation performed by a user to start an application.

Step 320: Display a first interface on the display screen in response to the first operation.

Step 330: Detect a second operation performed by the user in the first interface to indicate to shoot an image, or detect a second operation performed by the user in the first interface to indicate to select an image.

Step 340: Display a multi-dimensional model of a target object in the first interface or a second interface in response to the second operation, where the multi-dimensional model is a multi-dimensional model constructed for the target object in a target image collected by the camera or in a selected target image, and model construction parameters required for constructing the multi-dimensional model are model construction parameters that match an object mask corresponding to the target object.

In this embodiment, the user inputs the first operation on the electronic device to start the application (application, APP), and the first interface is displayed on the display screen in response to the first operation. The application is an application that is installed on the electronic device and that has an image display function. The application may be a camera application on the electronic device, or may be an application other than the camera on the electronic device. For example, after detecting that the user taps an application icon on a desktop, the electronic device may start the application and display the first interface.

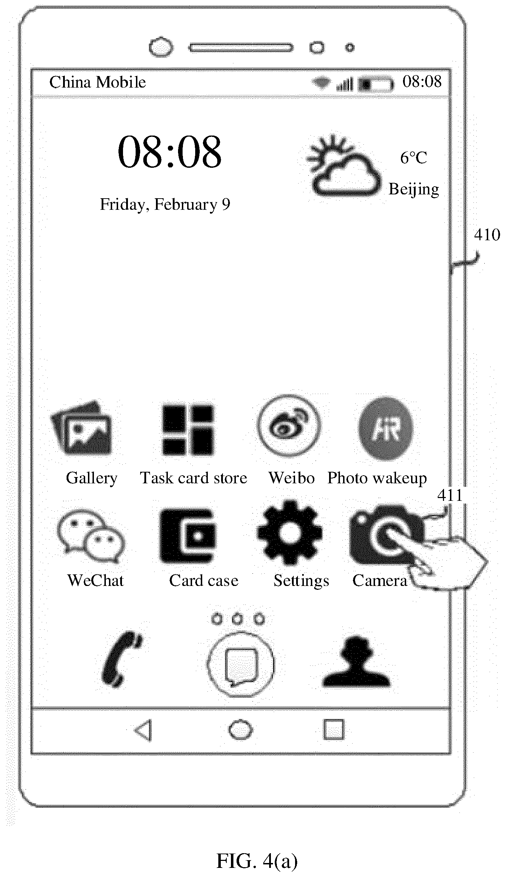

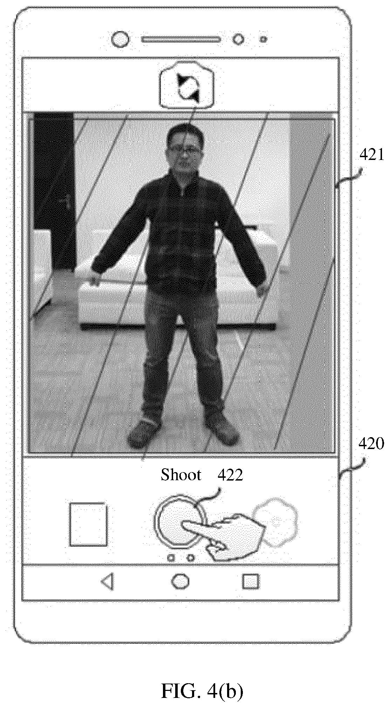

An example in which the application is a camera application on the electronic device is used. FIG. 4(a) shows a graphical user interface (graphical user interface, GUI) of the electronic device, and the GUI is a desktop 410 of the electronic device. When detecting an operation that the user taps an icon 410 of the camera application on the desktop 411, the electronic device may start the camera application, and display another GUI shown in FIG. 4(b). The GUI may be referred to as a first interface 420. The first interface 420 may include a viewfinder frame 421. In a preview state, the viewfinder frame 421 may display a preview image in real time.

For example, in FIG. 4(b), after the electronic device turns on the camera, the preview image may be displayed in the viewfinder frame 421. The preview image is a color image. The first interface 420 may further include a shooting control 422 used to indicate to shoot an image, and another control. It should be noted that in this embodiment of this application, a color image part is filled with dashed lines to distinguish the color image part from a grayscale image part.

Further, the electronic device detects the second operation performed by the user in the first interface to indicate to shoot an image. For example, referring to FIG. 4(b), after detecting that the user taps the shooting control 422, the electronic device uses a shot image (for example, a single frame of image) as the target image (or uses a person or an object in a shot image as a target object in the shot image).

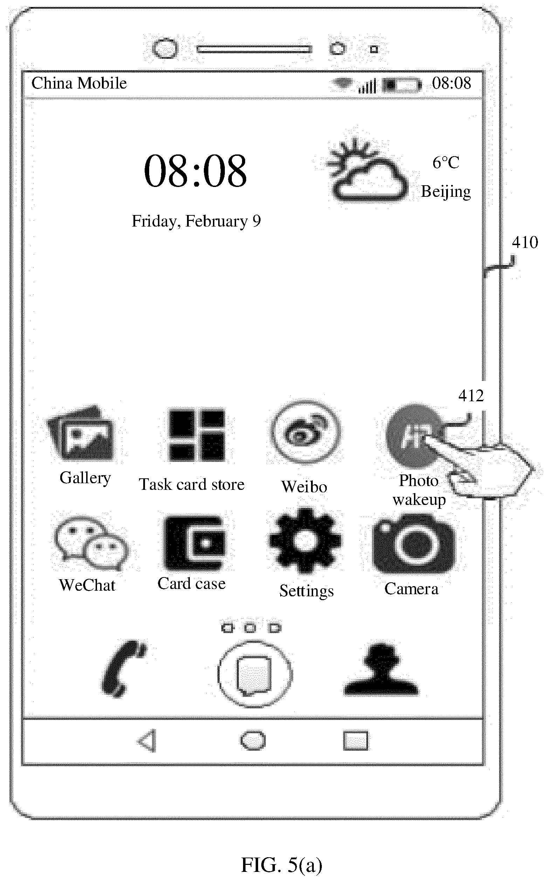

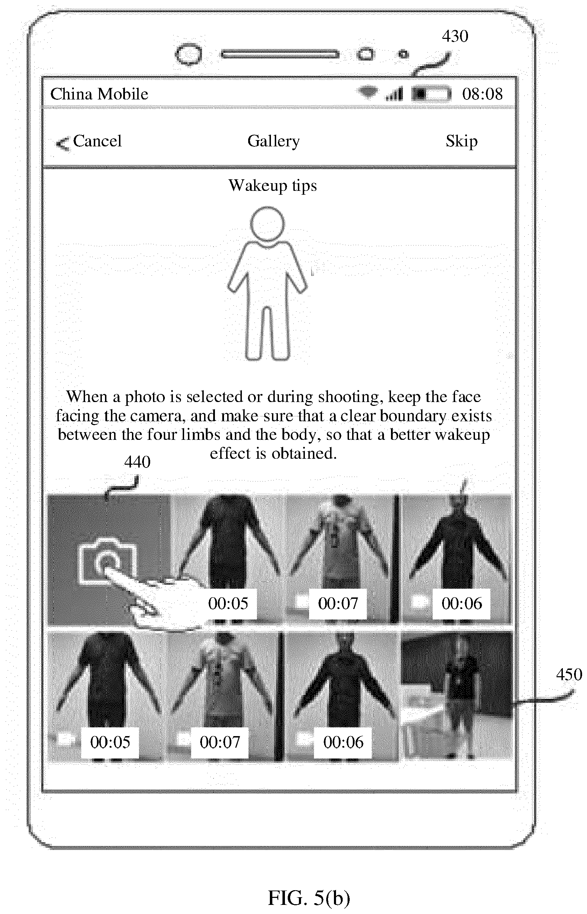

An example in which the application is an application other than the camera on the electronic device is used. FIG. 5(a) shows a desktop 410 of the electronic device. When detecting an operation that the user taps an icon 412 of an application (for example, a photo wakeup application) on the desktop 410, the electronic device may start the application, and display another GUI shown in FIG. 5(b). The GUI may be referred to as a first interface 430. The first interface 430 may include a shooting control 440 and a selection control 450. Each selection control 450 may correspond to an optional image, and the optional image is an image stored in a built-in memory or an external memory of the electronic device.

It should be noted that, on some electronic devices, the first interface 430 may include no selection control 450. On some other electronic devices, the first interface 430 may include no shooting control 440.

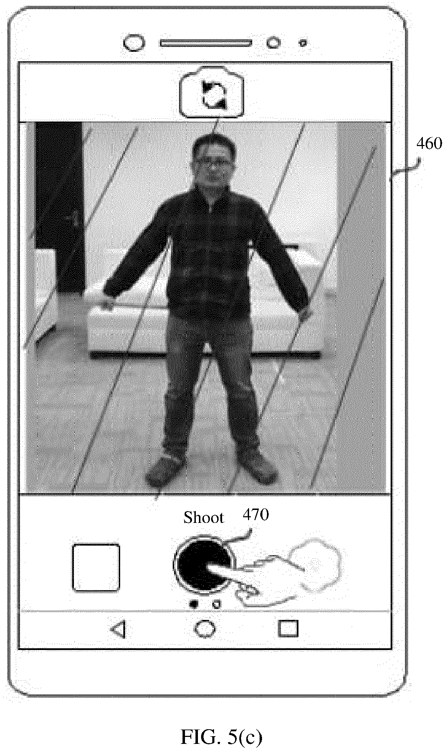

In an example, the electronic device may detect the second operation performed by the user in the first interface 430 to indicate to shoot an image. For example, referring to FIG. 5(b), the first interface 430 includes the shooting control 440. Referring to FIG. 5(c), after the electronic device detects that the user taps the shooting control 440, the electronic device displays a shooting interface 460. The shooting interface 460 includes a shooting control 470 used to indicate to shoot an image. After detecting that the user taps the shooting control 470 in the shooting interface 460, the electronic device uses a shot image as the target image (or uses a person or an object in a shot image as a target object in the shot image).

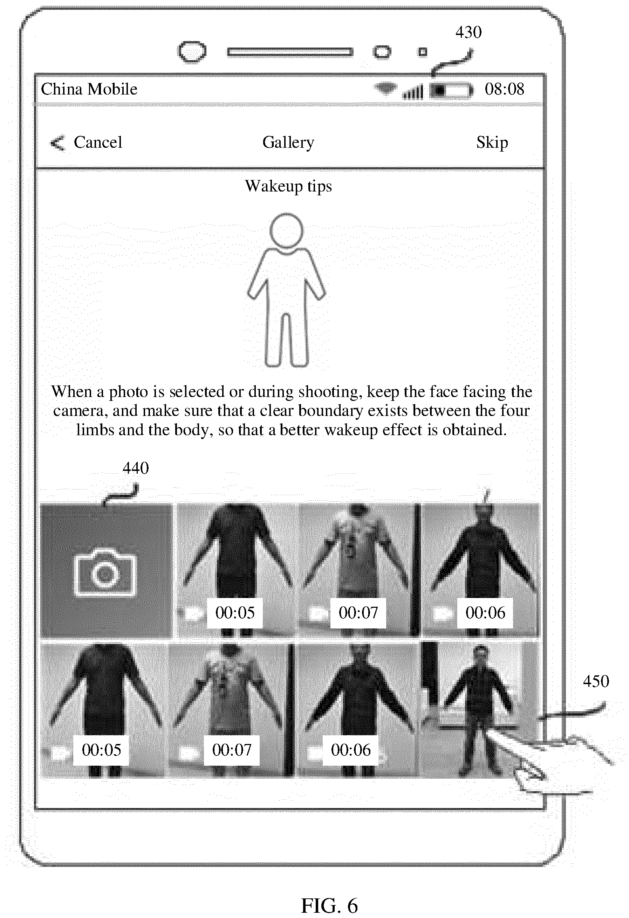

In an example, the electronic device may detect the second operation performed by the user in the first interface 430 to indicate to select an image. For example, referring to FIG. 6, the first interface includes at least one selection control 450, and each selection control corresponds to an optional image. After detecting that the user taps one selection control 450, the electronic device uses an optional image corresponding to the selection control 450 as the target image (or the electronic device uses a person or an object in an optional image corresponding to the selection control 450 as a target object in the selected image).

It should be understood that the first operation and/or the second operation of the user may include a behavior that the user presses or touches a related control on the electronic device, or may include a behavior that the user inputs a voice instruction to the electronic device, or may include another behavior that the user indicates the electronic device. The foregoing descriptions are examples, and do not constitute any limitation on this application.

In this application, the electronic device detects the first operation performed by the user to start an application, displays the first interface, detects the second operation performed by the user in the first interface, and obtains a shot single frame of image or a selected single frame of image in response to the second operation. In this application, the shot single frame of image or the selected single frame of image is referred to as a target image. The target image includes an object for which a multi-dimensional model needs to be constructed, and the object for which the multi-dimensional model needs to be constructed is referred to as a target object. The target object may be a person, an animal, a sculpture, or the like. In the examples in FIG. 4(a) to FIG. 6, the target image is a person image, and correspondingly the target object is a person.

It may be understood that the target object in the target image is complete. For example, a complete body or a relatively complete body of the target object is displayed in the target image, the target object is not blocked by another object, a face of the target object faces in a lens direction, and each body region of the target object has a clear boundary. The target image may include one target object, or may include a plurality of target objects. This is not limited in this embodiment.

The target image is a color image. For example, the target image may be images in different color coding formats, such as an RGB image, a YUV image, and an HSV image. The RGB image is an image for which an RGB color mode is used. The RGB color mode is a color standard in the industry, and is used to obtain a variety of colors by changing three color channels such as red (red, R), green (green, G), and blue (blue, B) and superimposing the three color channels onto each other. RGB is a color representing the red, green, and blue channels. This standard almost includes all colors that can be perceived by human vision, and is one of most widely used color systems at present. In the YUV image, brightness and chrominance are used to specify a color of a pixel, where Y represents brightness and UV represents chrominance. Color parameters used in the HSV image are respectively: hue (H), saturation (S), and brightness (V).

Optionally, the target image in this embodiment of this application may be a single two-dimensional image such as the foregoing RGB image, YUV image, or HSV image.

Optionally, the target image in this embodiment of this application may be a single image that has depth information, for example, an RGBD image. The RGBD image is obtained by adding a depth map (depth map) to the RGB image. The depth map indicates information about a distance from a viewpoint to a surface of a scene object. The depth map is similar to a grayscale image, and a difference is that each pixel value of the depth map is an actual distance from a sensor to an object. Usually, the RGB image matches the depth map, and therefore there is a one-to-one correspondence between pixels.

In this application, after obtaining the target image in response to the second operation, the electronic device performs modeling processing on the target object in the target image to generate a model of the target object. The model may be a three-dimensional model or a model in more dimensions. This is not specifically limited in this embodiment. In subsequent examples, the three-dimensional model is used as an example for description. When a model is used in the subsequent descriptions, unless otherwise specified, the model may be understood as a three-dimensional model. When the target image includes a plurality of target objects, modeling processing may be performed on each target object to generate a three-dimensional model of each target object. Certainly, modeling processing may be performed only on one of the target objects to generate a three-dimensional model of the target object.

In this application, the electronic device constructs a multi-dimensional model (for example, a three-dimensional model) for the target object, and displays the multi-dimensional model in the first interface or the second interface. The model construction parameters required for constructing the multi-dimensional model are model construction parameters that match the object mask corresponding to the target object. The model construction parameters are a series of parameters required for constructing a model, and include but are not limited to a semantic parameter and a depth parameter. Because the model construction parameters are model construction parameters that match the object mask of the target object, the multi-dimensional model generated by using the model construction parameters matches the target object. This improves a modeling effect of the target object.

In an example, the generated three-dimensional model in this embodiment may be displayed in the second interface of the electronic device. In another example, the electronic device detects the first operation performed by the user to start an application, and displays the first interface. The electronic device detects the second operation performed by the user in the first interface to shoot an image or select an image. In response to the second operation, the electronic device uses the shot image as the target image, or uses the selected image as the target image, and performs modeling processing in this embodiment on a target object in the target image to generate a three-dimensional model of the target object. In addition, the electronic device displays the second interface, and displays the three-dimensional model of the target object in the second interface.

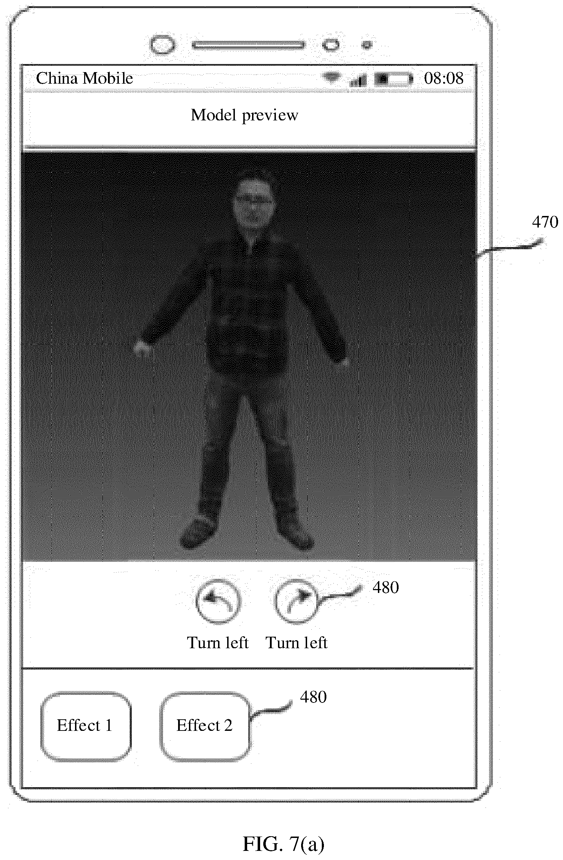

For example, after the user performs a shooting operation in the first interface 420 in FIG. 4(a) and FIG. 4(b), or performs a shooting operation in the shooting interface 460 in FIG. 5(c), or selects an image in the first interface 430 in FIG. 6, the electronic device displays a second interface shown in FIG. 7(a) to FIG. 7(c). As shown in FIG. 7(a), the three-dimensional model of the target object is displayed in a second interface 470. The user views the three-dimensional model of the target object by using the second interface. Compared with viewing a two-dimensional target object by using an original target image, this method can enhance an authentic feeling of the user when viewing the target object.

In another example, the electronic device may display the three-dimensional model of the target object in the first interface. For example, an original target object and a three-dimensional model of the target object are displayed at different moments in the first interface, for example, the three-dimensional model of the target object is superimposed onto the first interface. This is not limited in this embodiment.

Optionally, in this embodiment, when the three-dimensional model of the target object is displayed in the first interface or the second interface, the three-dimensional model of the target object may be embedded into a three-dimensional scene, and is displayed in the first interface or the second interface. The three-dimensional scene may be a preset three-dimensional scene, or may be a three-dimensional scene corresponding to a background in the original target image.

In this application, the three-dimensional model that is of the target object and that is displayed in the first interface or the second interface may be a static three-dimensional model or a dynamic three-dimensional model.

When the model displayed in the first interface or the second interface is a static three-dimensional model, the electronic device may further detect a third operation performed by the user in the first interface or the second interface. The third operation is used to indicate a dynamic effect of the three-dimensional model. In response to the third operation, the electronic device displays a dynamic three-dimensional model in the first interface or the second interface. The dynamic three-dimensional model is obtained by adding the dynamic effect to the static three-dimensional model.

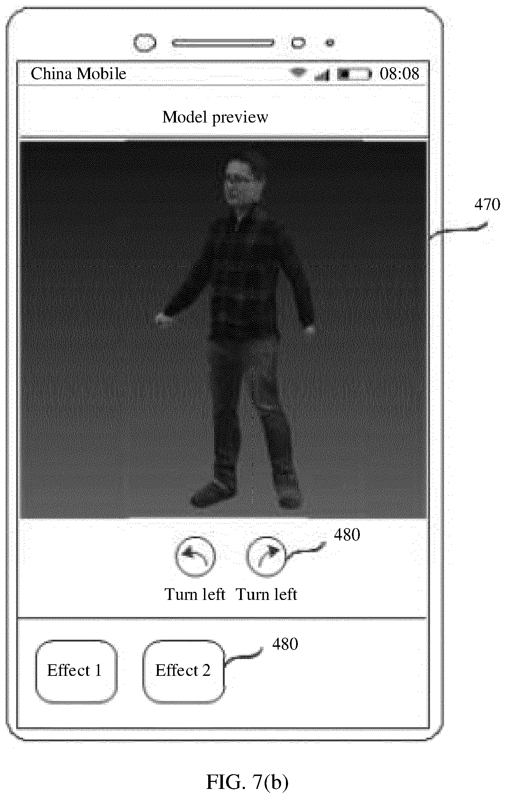

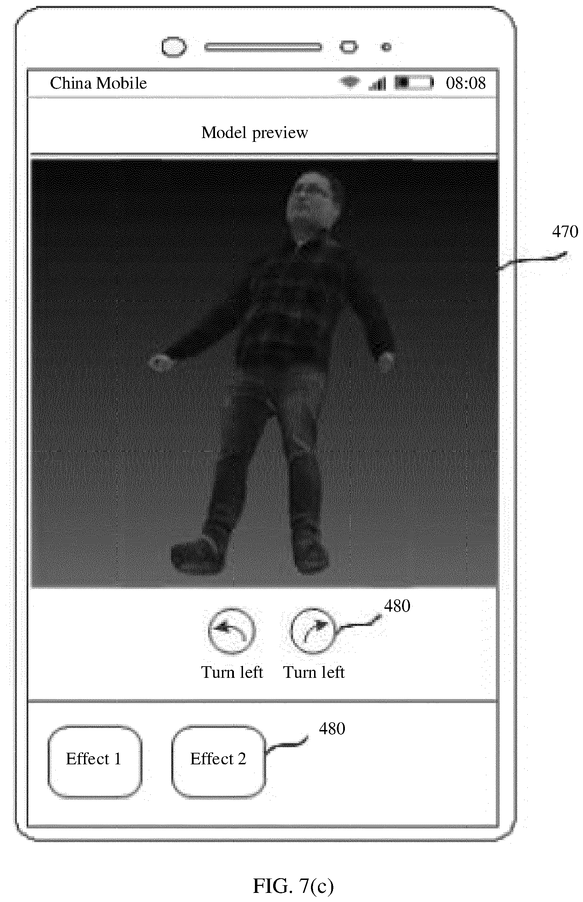

In an example, as shown in FIG. 7(a) to FIG. 7(c), the second interface 470 may further include at least one interactive control 480. Each interactive control may correspond to one dynamic effect. For example, the interactive control may be used to rotate the model leftward or rightward. Certainly, the model may be rotated in another direction. FIG. 7(b) and FIG. 7(c) illustrate two possible rotation effects. In some examples, the interactive control may be further used to add some dynamic effects to the three-dimensional model, for example, a raindrop effect and an effect of floating banknotes in the air. Alternatively, the interactive control may be used to add some animation effects, for example, drive the three-dimensional model to perform some actions such as dancing. After detecting the third operation performed by the user by operating the interactive control, the electronic device adds a dynamic effect corresponding to the interactive control to the static three-dimensional model, to obtain a dynamic model. In this way, the electronic device displays the dynamic three-dimensional model in the first interface or the second interface, so that the user views the three-dimensional model with the dynamic effect. This improves viewing experience of the user.

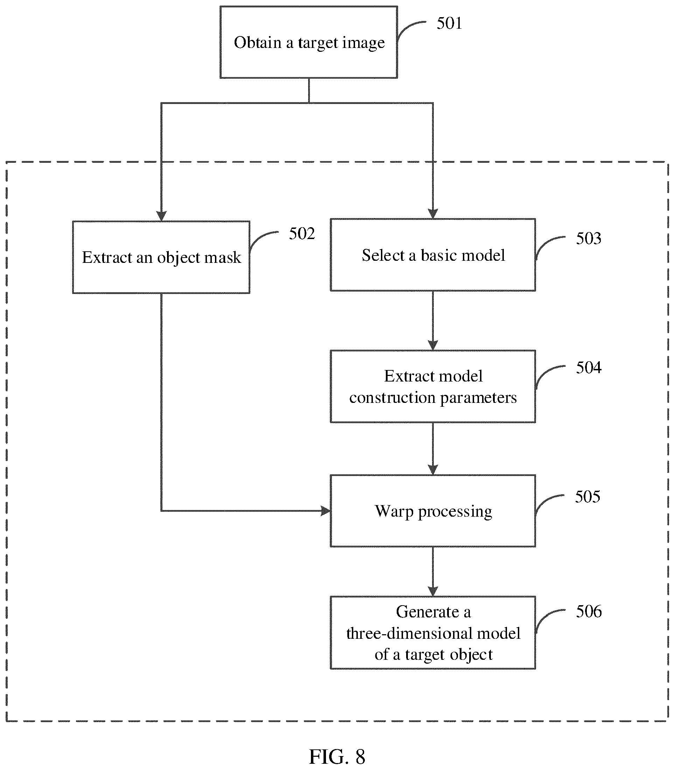

In an example, a modeling processing process in this application is as follows: adjusting model construction parameters corresponding to a basic model based on the object mask that corresponds to the target object and that is extracted from the target image, and generating the three-dimensional model of the target object by using adjusted model construction parameters. With reference to FIG. 8 that includes step 501 to step 506, the following describes a specific modeling process.

Step 501: Obtain a target image (which may also be referred to as an input image).

For example, in response to the second operation, the electronic device uses a shot image as the target image (namely, obtains the target image in real time), or uses an image selected by the user as the target image (namely, obtains the target image from an existing image). A manner of obtaining the target image is not limited in this application.

Step 502: Obtain an object mask corresponding to a target object in the target image.

It should be noted that a person or an object (for example, a sculpture) in the target image may be understood as the target object in the target image.

The object mask is extracted for the target object in the target image, to obtain the object mask corresponding to the target object. The object mask indicates a region surrounded by a body contour of the target object. For example, in the target image, a pixel belonging to a body of the target object is represented by using 1, and another pixel (for example, a background or another object) is represented by using 0, to obtain the object mask of the target object.

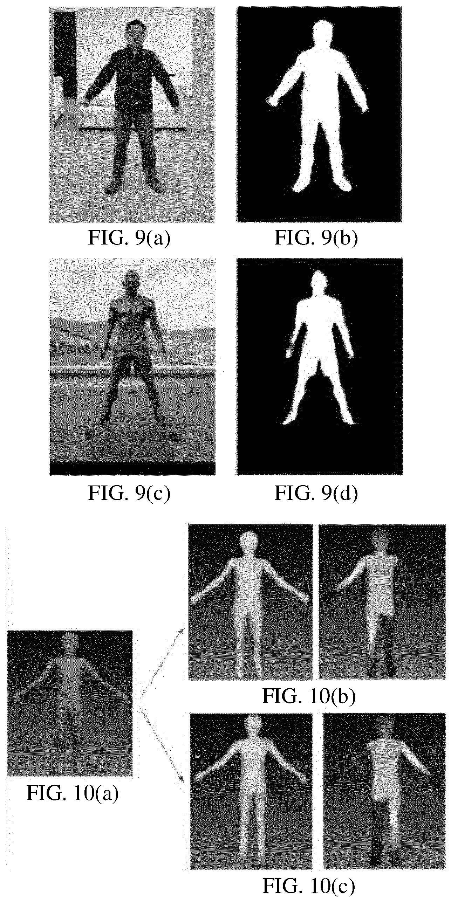

As shown in FIG. 9(a) to FIG. 9(d), a target image shown in FIG. 9(a) is a person image, a mask is extracted for a person (namely, an example of the target object) in the target image, and an obtained object mask is shown in FIG. 9(b). A target image shown in FIG. 9(c) includes a sculpture, a mask is extracted for the sculpture (namely, an example of the target object) in the target image, and an obtained object mask is shown in FIG. 9(d). It may be learned from FIG. 9(a) to FIG. 9(d) that the object mask reflects a feature such as a body contour or a body shape of the target object. It should be understood that the target object herein is not limited to a person or a sculpture either, for example, may be an animal or a plant.

It should be noted that an existing image segmentation technology may be used to segment the target image, for example, a threshold-based segmentation method, an edge-based segmentation method, a region-based segmentation method, and a graph-theory-based segmentation method. Details are not described in this embodiment.

Step 503: Obtain a basic model corresponding to an attribute of the target object.

It should be understood that the basic model herein may also be referred to as a template model. As the name indicates, the basic model (or the template model) is a model that has been established in advance. For example, a polygon mesh model may be used as the basic model, for example, a triangle mesh model.

It may be understood that models of different objects may vary greatly. For example, a person model and an animal model vary greatly, a male model and a female model also vary greatly, and an adult model and a child model also vary greatly. Therefore, in this embodiment, when the basic model is selected, the basic model corresponding to the attribute of the target object is selected. When the target object is a person, an animal, or a sculpture, the attribute of the target object includes but is not limited to an age, a gender, a body shape, and a posture. When the target object is an object, the attribute of the target object includes but is not limited to a type and a size. When the target object is a plant, the attribute of the target object includes but is not limited to an order and a height. An example in which the target object is a person is used. If the target object is a male, a model corresponding to the male is selected. If the target object is a child, a model corresponding to the child is selected. If the target object is very fat, a model corresponding to a fat person is selected. It should be understood that, when the basic model is selected, one or more attributes of the target object may be considered. When the target object is an animal, the attribute of the target object includes but is not limited to an animal type, a body shape, a posture, and an age.

In an example, the basic model (also referred to as a template model) corresponding to the attribute of the target object may be selected from a basic model set based on the attribute of the target object. It should be understood that the basic model set herein may also be referred to as a template model set. For example, the basic model set may include a plurality of basic models, and each basic model corresponds to one or more attributes. For example, an attribute corresponding to a basic model 1 is a male, an adult, and a fat person, an attribute corresponding to a basic model 2 is a female and a child, an attribute corresponding to a basic model 3 is an elder and a thin person, an attribute corresponding to a basic model 4 is a cat, and an attribute corresponding to a basic model 5 is a dog. In this way, the target image may be first analyzed and identified to determine the attribute of the target object. Then, a basic model having a highest matching degree with the attribute of the target object is selected from the basic model set based on the attribute of the target object. In an example, the foregoing basic model set may be the basic model set 101 in FIG. 1.

It should be understood that an existing image analysis technology may be used to analyze and identify the icon image to determine the attribute of the target object. This is not limited in this embodiment.

Step 504: Obtain, based on the basic model, model construction parameters required for constructing a model of the target object.

The model construction parameters are a series of parameters required for constructing a model. A three-dimensional model is used as an example. When the three-dimensional model is generated, depth information and semantic information of each vertex in the model need to be determined. Therefore, the model construction parameters may be parameters indicating the depth information and the semantic information.

In an example, the model construction parameters may include a depth map of a first surface of the basic model, a semantic map of the first surface of the basic model, a depth map of a second surface of the basic model, and a semantic map of the second surface of the basic model. The first surface and the second surface are surfaces of the basic model. For example, the first surface may be a front side of the basic model, and the second surface may be a back side of the basic model.

The depth map of the first surface indicates depth information (namely, information about a distance between each vertex on the first surface and the camera) corresponding to each vertex on the first surface of the basic model, and the depth map of the second surface indicates depth information (namely, information about a distance between each vertex on the second surface and the camera) corresponding to each vertex on the second surface of the basic model. The semantic map of the first surface indicates semantic information (namely, information about a position of each vertex on the first surface on a body) corresponding to each vertex on the first surface of the basic model, and the semantic map of the second surface indicates semantic information (namely, information about a position of each vertex on the second surface on the body) corresponding to each vertex on the second surface of the basic model.

It should be understood that, when the basic model includes a plurality of surfaces, a depth map and a semantic map of each surface may be obtained. For ease of description, the front side is used as the first surface and the back side is used as the second surface below.

In this embodiment, the depth map and the semantic map of each surface of the basic model may be obtained by rendering (rendering) each surface of the basic model. The target image shown in FIG. 9(a) is used as an example. Because the target object in FIG. 9(a) is a male person, the selected basic model is the model corresponding to the male. For example, the selected basic model is shown in FIG. 10(a). The front side of the basic model is rendered to obtain a front depth map and a front semantic map shown in FIG. 10(b). The back side of the basic model is rendered to obtain a back depth map and a back semantic map shown in FIG. 10(c).

Step 505: Perform warp processing on the model construction parameters to obtain model construction parameters that match the object mask.

It may be understood that, in this embodiment, although the attribute of the target object is considered when the basic model is selected, there may be some differences between the basic model and the target object, for example, a weight difference, a posture difference, and a height difference. Therefore, in this embodiment, after the model construction parameters are obtained based on the basic model, the model construction parameters are adjusted by using step 505 instead of directly constructing the model by using the model construction parameters, so that a three-dimensional model generated based on the adjusted model construction parameters is closer to the target object. Therefore, this improves a display effect of the three-dimensional model displayed in a user interface (for example, the first interface or the second interface) of the electronic device.

In this embodiment, warp processing is performed on the model construction parameters, so that warped model construction parameters match the object mask. Warp processing may include but is not limited to translation transformation, affine transformation, rotation transformation, and distortion transformation.

A warp processing process may include: performing warp processing on the front depth map based on the object mask and the front semantic map, so that a warped front depth map matches the object mask, and performing warp processing on the back depth map based on the object mask and the back semantic map, so that a warped back depth map matches the object mask.

The front side is used as an example. Because the front depth map and the front semantic map are obtained by rendering the front side of the basic model, pixels in the front depth map are in a one-to-one correspondence with pixels in the front semantic map. In other words, pixels at same positions in the front depth map and the front semantic map correspond to a same vertex in the basic model. Therefore, a correspondence between each pixel in the front depth map and each pixel in the object mask may be determined by using the front semantic map. In this way, warp processing is performed on the front depth map based on the correspondence between each pixel in the front depth map and each pixel in the object mask, so that a warped front depth map matches the object mask.

It should be understood that an adjustment process of the back depth map is similar to the adjustment process of the front depth map. Details are not described herein again.

Step 506: Generate a three-dimensional model of the target object based on the model construction parameters that match the object mask.

After the foregoing warp processing, the depth map of the first surface and the depth map of the second surface that match the object mask are obtained. Mesh processing is performed on the depth map that is of the first surface and that matches the object mask, to obtain mesh information of the first surface. Mesh processing is performed on the depth map that is of the second surface and that matches the object mask, to obtain mesh information of the second surface. Fusion processing is performed on the mesh information of the first surface and the mesh information of the second surface to obtain the three-dimensional model of the target object.

In this embodiment, mesh processing may be performed by using an existing mesh processing technology, for example, a Poisson (Possion) reconstruction technology. Details are not described in this embodiment.

In a possible implementation, after the mesh information of the first surface and the mesh information of the second surface are obtained, optimization adjustment may be further performed on the mesh information of the first surface based on the semantic map of the first surface, and optimization adjustment may be further performed on the mesh information of the second surface based on the semantic map of the second surface. In this way, a three-dimensional model obtained by fusing the mesh information, that is of the first surface and that is obtained after optimization adjustment, with the mesh information, that is of the second surface and that is obtained after optimization adjustment, better matches the target object. This improves a modeling effect.

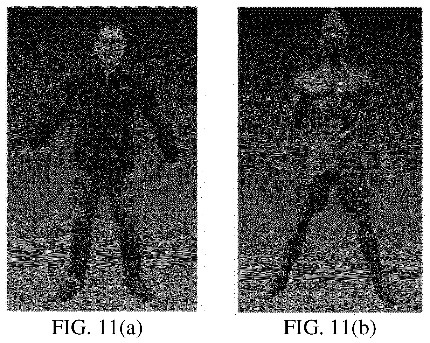

For the target image shown in FIG. 9(a), after modeling processing in this embodiment is performed, an obtained model is shown in FIG. 11(a). For the target image shown in FIG. 9(c), after modeling processing in this embodiment is performed, an obtained three-dimensional model is shown in FIG. 11(b).

In this embodiment of this application, the target image and the object mask corresponding to the target object in the target image are obtained, the basic model corresponding to the attribute of the target object is obtained, the model construction parameters required for constructing the model of the target object are obtained based on the basic model, warp processing is performed on the model construction parameters to obtain the model construction parameters that match the object mask, and the three-dimensional model of the target object is generated based on the model construction parameters that match the object mask. It may be learned that, in this embodiment, the three-dimensional model of the target object may be generated only by using a single target image and the basic model. Compared with an existing model reconstruction technology, target images at a plurality of angles of view do not need to be collected, and a video in a same scene does not need to be collected. Instead, only a single target image needs to be collected, the model construction parameters of the basic model are adjusted to match the object mask extracted from the single target image, and the three-dimensional model is generated based on the matched model construction parameters. Therefore, preparation working for model reconstruction is reduced. In addition, a computing amount of model reconstruction is reduced, and computing resources are saved. Further, because the model construction parameters for generating the three-dimensional model match the object mask of the target object, the generated three-dimensional model matches the object mask of the target object. This improves a modeling effect.

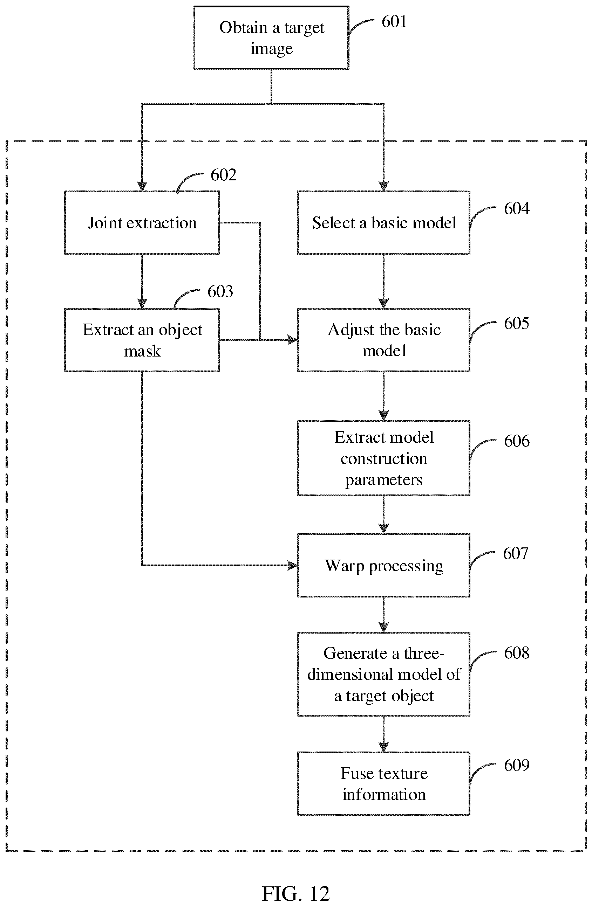

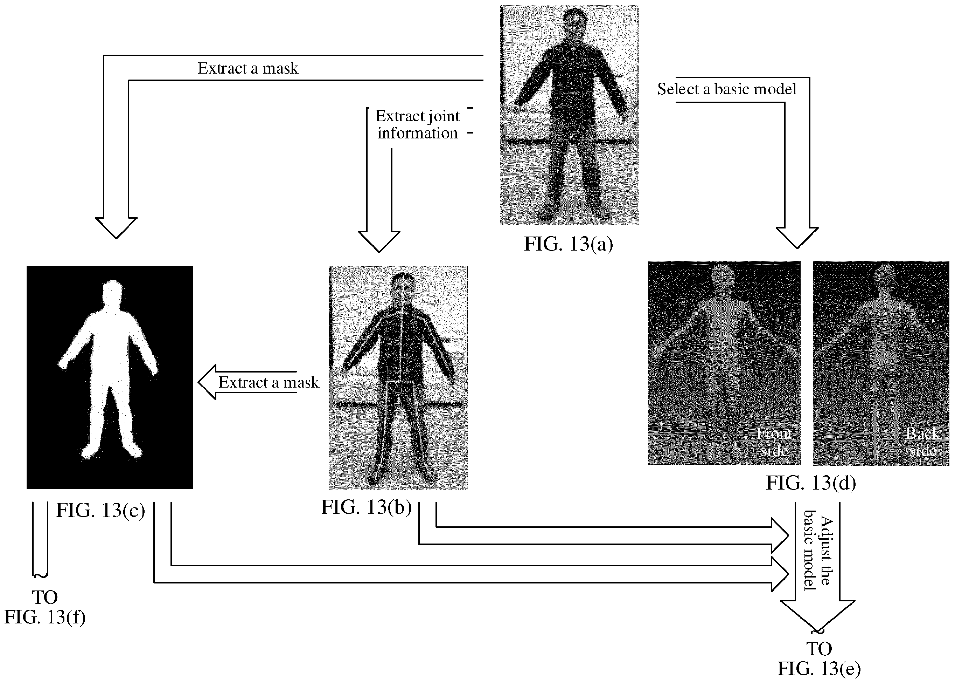

With reference to FIG. 12 and FIG. 13(a) to FIG. 13(h), the following describes another modeling processing process in this embodiment of this application. As shown in FIG. 12, the modeling processing process may include step 601 to step 608.

Step 601: Obtain a target image.

For example, in response to the second operation, the electronic device uses a shot image as the target image, or uses an image selected by the user as the target image. In this embodiment, an image shown in FIG. 13(a) is used as the target image, and a target object in the target image is a person.

Step 602: Extract joint information of a target object in the target image.

Joint extraction is performed on the target object in the target image by using a joint extraction technology, to obtain the joint information corresponding to the target object. The joint includes but is not limited to a head, a neck, a right shoulder, a right elbow, a right wrist, a left shoulder, a left elbow, a left wrist, a right hip joint, a right knee, a right ankle, a left hip joint, a left knee, a left ankle, and a body center point.

In an example, joint extraction is performed on the target image shown in FIG. 13(a), to obtain joint information shown in FIG. 13(b). It may be learned from FIG. 13(b) that the target object may be divided into a plurality of body parts based on the extracted joint information, for example, a head, a trunk, a left arm, a right arm, a left leg, a right leg, a left hand, and a right hand.

Step 603: Obtain an object mask corresponding to the target object in the target image.

In a possible implementation, similar to the embodiment shown in FIG. 5(a) to FIG. 5(c), the target image may be segmented by using an existing image segmentation technology, to obtain the object mask.

In another possible implementation, the target object in the icon image may be segmented based on the joint information extracted in step 602, to improve image segmentation accuracy, so that the object mask that is of the target object and that is obtained through segmentation is more accurate. For example, the target image in FIG. 13(a) is segmented by using the joint information in FIG. 13(b), so that the obtained object mask of the target object is shown in FIG. 13(c).

Step 604: Obtain a basic model corresponding to an attribute of the target object.

It should be understood that a process of selecting the basic model in this embodiment is similar to step 503 in the embodiment shown in FIG. 5(a) to FIG. 5(c), and details are not described herein again. For the target image shown in FIG. 13(a), the selected basic model is shown in FIG. 13(d). FIG. 13(d) respectively shows a front side and a back side of the basic model.

Optionally, the basic model includes a plurality of body parts, each body part includes a plurality of vertices, a range of semantic information corresponding to vertices in different body parts is different, and semantic information corresponding to any two vertices in a same body part is different; or
the basic model includes a plurality of object parts, each object part includes a plurality of vertices, a range of semantic information corresponding to vertices in different object parts is different, and semantic information corresponding to any two vertices in a same object part is different.

The target object may include a plurality of object parts, and each object part is a region of the target object. It should be understood that object part division manners corresponding to different target objects may be different.

A human body is used as an example. The target object is divided into a plurality of body parts, for example, a head, a trunk, a left arm, a right arm, a left leg, a right leg, a left hand, and a right hand. The basic model in this embodiment is different from an existing human model. In the existing human model, semantic information is usually assigned to each body part. For example, semantic information corresponding to the head is 1, namely, semantic information corresponding to each vertex in the head is 1, and semantic information corresponding to the trunk is 2, namely, semantic information corresponding to each vertex in the trunk is 2. In this embodiment, a range of semantic information corresponding to vertices in different body parts in the basic model is different, and semantic information corresponding to any two vertices in a same body part is different, so that semantic information corresponding to any two vertices in the basic model is different.

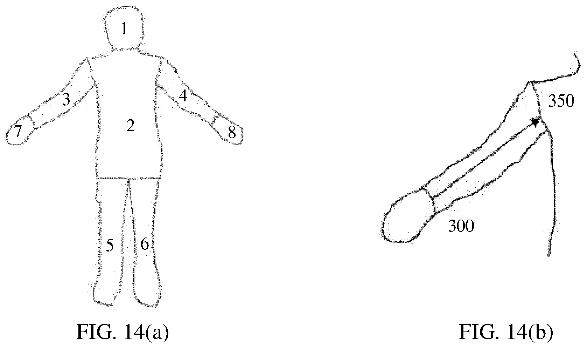

In an example, as shown in FIG. 14(a), a human body is divided into a plurality of body parts, for example, a part 1 (a head), a part 2 (a trunk), a part 3 (a right arm), a part 4 (a left arm), a part 5 (a right leg), a part 6 (a left leg), a part 7 (a right hand), and a part 8 (a left hand).

Numerical semantic information with different ranges is assigned to all the parts. Semantics of the head is 100 to 150, semantics of the trunk is 200 to 250, semantics of the right arm is 300 to 350, semantics of the left arm is 400 to 450, semantics of the right leg is 500 to 550, semantics of the left leg is 600 to 650, semantics of the right hand is 700 to 750, and semantics of the left hand is 800 to 850.

Specifically, consecutive numerical semantic information is assigned to any one of the parts. As shown in FIG. 14(b), the right arm is used as an example. Semantics of a vertex corresponding to a right wrist is defined as 300, semantics of a vertex corresponding to an intersection between a right axilla and the trunk is defined as 350, and semantics of another vertex on the right arm increases in a range from 300 to 350. Semantics of each vertex may be an integer or a decimal number.

In this embodiment, semantic information corresponding to any two vertices in the basic model is different, so that vertices in the basic model can accurately correspond to different positions on the target object. In other words, the basic model can distinguish between different positions on the target object, so that the basic model describes the target object more accurately. In this way, subsequent modeling processing is performed based on a basic model that has accurate semantic information. This can improve a modeling effect.

Step 605: Adjust the basic model, so that a body shape of an adjusted basic model adaptively matches a body shape of the target object.

It should be understood that, although the attribute of the target object is considered when the basic model is selected, there may be some differences between the basic model and the target object, and the differences include but are not limited to a weight difference, a posture difference, and a height difference. For example, the person in FIG. 13(a) is fatter and taller than the basic model in FIG. 13(d). Therefore, in this embodiment, the basic model is adjusted by using step 605, so that the body shape of the adjusted basic model adaptively matches (is as close as possible to) the body shape of the target object.

A process of adjusting the basic model may be executed through iterative optimization.

In an iteration manner, a degree at which the body shape of the basic model matches the body shape of the target object is used as an iteration termination condition.

In an example, the basic model may be adjusted based on the object mask, so that the body shape of the adjusted basic model adaptively matches (is as close as possible to) the body shape (for example, a height or a weight) of the target object. For example, the basic model in FIG. 13(d) is adjusted based on the object mask in FIG. 13(c), so that the body shape of the adjusted basic model is as close as possible to the body shape of the target object. In an example iteration process, parameters of the basic model are continuously adjusted. If a degree at which a body shape of a basic model obtained after the parameters are adjusted matches the body shape of the target object is less than a matching threshold, the parameters of the basic model continue to be adjusted. If a degree at which a body shape of a basic model obtained after the parameters are adjusted matches the body shape of the target object is higher than or equal to a matching threshold, the iteration process is stopped. In another example iteration process, parameters of the basic model are continuously adjusted, and the iteration process is stopped when a degree at which the body shape of the adjusted basic model matches the body shape of the target object no longer increases.

In another example, the joint information corresponding to the target object is obtained, and the basic model is adjusted based on the object mask and the joint information, so that the body shape (for example, a weight or a height) and a posture (for example, a joint position) of the adjusted basic model adaptively match the body shape and a posture of the target object. The basic model in FIG. 13(d) is adjusted based on the joint information shown in FIG. 13(b) and the object mask in FIG. 13(c), so that the body shape and the posture of the adjusted basic model are as close as possible to those of the target object. In an example iteration process, parameters of the basic model are continuously adjusted. If a degree at which a body shape and a posture of a basic model obtained after the parameters are adjusted match the body shape and the posture of the target object is less than a matching threshold, the parameters of the basic model continue to be adjusted. If a degree at which a body shape and a posture of a basic model obtained after the parameters are adjusted match the body shape and the posture of the target object is higher than or equal to a matching threshold, the iteration process is stopped. In another example iteration process, parameters of the basic model are continuously adjusted, and the iteration process is stopped when a degree at which the body shape and the posture of the adjusted basic model match the body shape and the posture of the target object no longer increases.

In another iteration manner, the basic model is adjusted N times based on the object mask, so that a degree at which a body shape of a basic model adjusted for an n^{th} time matches the body shape of the target object is better than a degree at which a body shape of a basic model adjusted for an m^{th} time matches the body shape of the target object. Alternatively, the joint information corresponding to the target object is obtained, and the basic model is adjusted N times based on the object mask and the joint information, so that a degree at which a body shape and a posture of a basic model adjusted for an n^{th} time match the body shape and a posture of the target object is better than a degree at which a body shape and a posture of a basic model adjusted for an m^{th} time match the body shape and the posture of the target object. N represents a preset quantity of adjustment times (for example, a maximum quantity of adjustment times), N, n, and m are positive integers, n is greater than m, and n and m are less than or equal to N. Correspondingly, the model construction parameters required for constructing the model of the target object are obtained based on the basic model adjusted N times.

In this implementation, the maximum quantity of adjustment times is used as an iteration termination condition. An example in which the maximum quantity of adjustment times is N is used. In this way, the degree at which the body shape of the basic model adjusted for the n^{th} time matches the body shape of the target object is better than the degree at which the body shape of the basic model adjusted for the m^{th} time matches the body shape of the target object, or the degree at which the body shape and the posture of the basic model adjusted for the n^{th} time match the body shape and the posture of the target object is better than the degree at which the body shape and the posture of the basic model adjusted for the m^{th} time match the body shape and the posture of the target object. It should be understood that, in an iteration process, it cannot be ensured that the basic model better matches the target object in each time of adjustment, but the adjusted basic model is closer to the target object in terms of an overall trend, where the n^{th} time of adjustment is after the m^{th} time of adjustment, and the n^{th} time of adjustment may not be limited to next adjustment adjacent to the m^{th} time of adjustment.

It should be noted that the body shape and the posture in this embodiment should be understood broadly. Meanings of the body shape and the posture may vary with the target object. When the target object is a person, an animal, a sculpture, or the like, the body shape may be a human body shape, an animal body shape, a sculpture body shape, or the like, and the posture may be a human body posture (a standing posture, a sitting posture, a running posture, or the like), an animal posture, a sculpture posture, or the like. When the target object is an object or a plant, a contour or an appearance of the object or the plant may be referred to as the body shape, a placement form of the object may be further referred to as the posture, and a growth state of the plant may be further referred to as the posture.

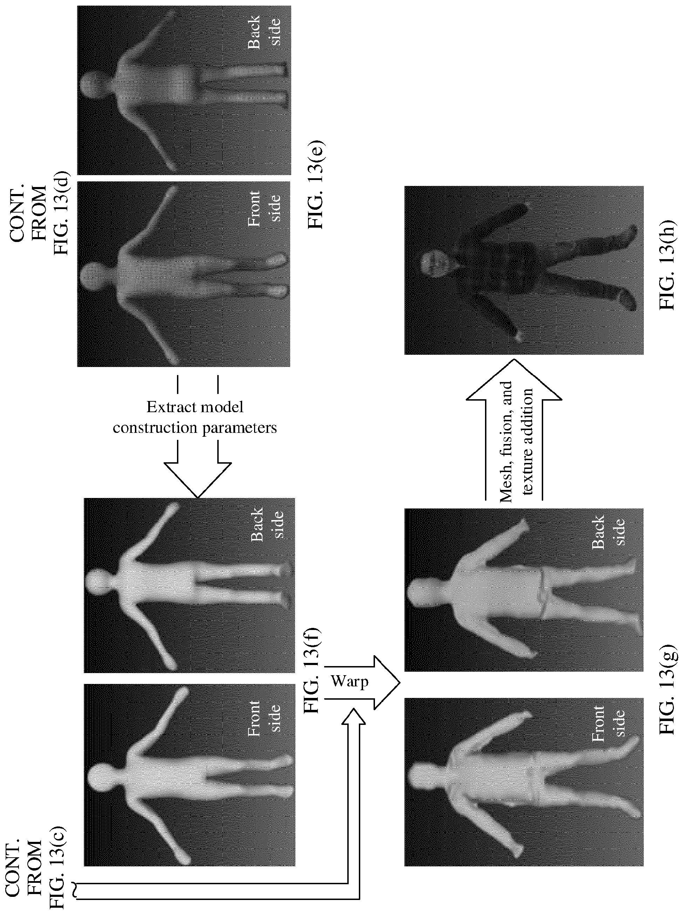

A process of adjusting the basic model in this embodiment includes but is not limited to the foregoing implementations. Another adjustment method that enables the body shape and/or the posture of the adjusted basic model to adaptively match the body shape and/or the posture of the target object may also be applied to the technical solutions of this application. The adjustment method in this application may be performed by using a conventional technology, for example, a preconditioned conjugate gradient (preconditioned conjugate gradient, PCG) method, and the PCG is a commonly-used posture optimization algorithm. The adjusted basic model is shown in FIG. 13(e).

Step 606: Obtain, based on the adjusted basic model, model construction parameters required for constructing a model of the target object.

A difference between an implementation of this step and that of step 504 in the embodiment shown in FIG. 5(a) to FIG. 5(c) is as follows: In this step, the model construction parameters are obtained based on the basic model adjusted in step 605. A specific process of obtaining the model construction parameters is similar to step 504, and details are not described herein again.

In an example, the model construction parameters obtained based on the basic model shown in FIG. 13(e) are shown in FIG. 13(f). FIG. 13(f) shows only a front depth map and a back depth map, and does not show a front semantic map and a back semantic map.

Step 607: Perform warp processing on the model construction parameters to obtain model construction parameters that match the object mask.

An implementation of this step is similar to that of step 505 in the embodiment shown in FIG. 5(a) to FIG. 5(c), and details are not described herein again. For example, warp processing is performed on the front depth map and the back depth map in FIG. 13(f), to obtain a warped front depth map and a warped back depth map shown in FIG. 13(g). The front depth map and the back depth map shown in FIG. 13(g) match the object template shown in FIG. 13(c).

It should be noted that, when warp processing is performed on the model construction parameters, warp processing may be performed only on the front depth map and the back depth map, and warp processing is not performed on the front semantic map and a back semantic map. It can be understood that, pixels in the front depth map are in a one-to-one correspondence with pixels in the front semantic map, and pixels in the back depth map are in a one-to-one correspondence with pixels in the back semantic map. Therefore, after warp processing is performed on the front depth map and the back map, semantic information of each pixel in a front depth map and a back depth map that are obtained after warp processing may be determined based on the foregoing correspondence.

In this embodiment, before the three-dimensional model is generated, first, the basic model is adjusted by using the object mask (namely, one time of adjustment), so that the body shape and/or the posture of the adjusted basic model tend/adaptively matches the body shape and/or the posture of the target object. Then, the model construction parameters are extracted based on the adjusted basic model, and warp processing is performed on the model construction parameters based on the object mask, so that the warped model construction parameters highly match the object mask (another time of adjustment). It may be learned that a modeling effect can be further improved through two times of adjustment.

Step 608: Generate a three-dimensional model of the target object based on the model construction parameters that match the object mask.

Step 609: Extract texture information of the target object from the target image, and fuse the texture information with the three-dimensional model of the target object.

An implementation of step 608 is similar to that of step 506 in the embodiment shown in FIG. 5(a) to FIG. 5(c), and details are not described herein again. For example, the three-dimensional model of the target object is obtained through mesh processing and fusion processing by using the front depth map and the back depth map shown in FIG. 13(g). Further, to enable the three-dimensional model of the target object to look more authentic, the texture information may be further added to the three-dimensional model of the target object in step 609. For example, texture information such as skin and clothing of a person is extracted from the target image shown in FIG. 13(a), a texture mapping relationship is established between the texture information and the three-dimensional model generated in step 608, and the texture information of the person in FIG. 13(a) is fused, based on the texture mapping relationship, with the three-dimensional model generated in step 608, to obtain a three-dimensional model obtained after the texture information is fused. The three-dimensional model is shown in FIG. 13(h).

In this embodiment, the three-dimensional model of the target object may be generated only by using a single target image and the basic model. Compared with an existing model reconstruction technology, target images at a plurality of angles of view do not need to be collected, and a video in a same scene does not need to be collected. Instead, only a single target image needs to be collected, the model construction parameters of the basic model are adjusted to match the object mask extracted from the single target image, and the three-dimensional model is generated based on the matched model construction parameters. Therefore, preparation working for model reconstruction is reduced. In addition, a computing amount of model reconstruction is reduced, and computing resources are saved. Further, in this embodiment, before the three-dimensional model is generated, first, the basic model is adjusted by using the object mask (namely, one time of adjustment), so that the body shape and/or the posture of the adjusted basic model tend/adaptively matches the body shape and/or the posture of the target object. Then, the model construction parameters are extracted based on the adjusted basic model, and warp processing is performed on the model construction parameters based on the object mask, so that the warped model construction parameters highly match the object mask (another time of adjustment). It may be learned that a modeling effect can be further improved through two times of adjustment. In addition, semantic information corresponding to any two vertices in the basic model in this embodiment is different, so that the basic model can distinguish between different positions on the target object, and the basic model describes the target object more accurately. Therefore, a modeling effect is further improved.

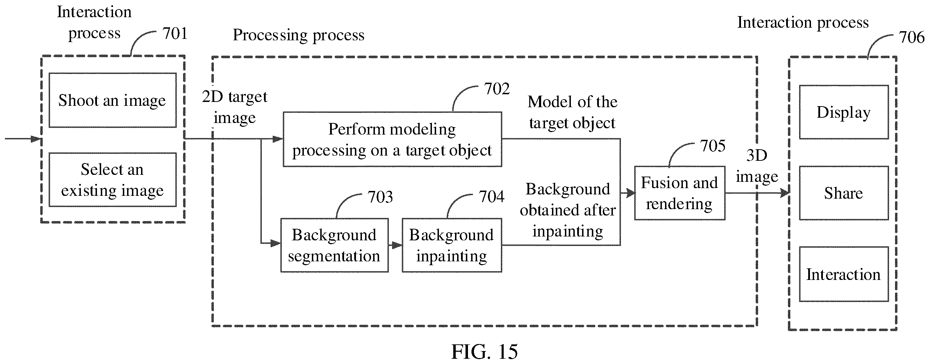

FIG. 15 is a schematic flowchart of an image display method according to an embodiment of this application. The method in this embodiment includes step 701 to step 706, to convert a two-dimensional (2D) image into a three-dimensional (3D) image.

As shown in FIG. 15, the method in this embodiment includes the following steps.

Step 701: Obtain a 2D target image.

For example, a user may shoot an image by using a shooting function of a camera or another application of an electronic device, and the electronic device uses the shot image as the target image. Alternatively, the user may select an existing image, and the electronic device uses the image selected by the user as the target image. The target image is a single frame of 2D image. For a specific implementation, refer to the embodiment shown in FIG. 4(a) and FIG. 4(b). Details are not described herein again.

Step 702: Perform modeling processing on a target object in the target image to obtain a three-dimensional model of the target object.

For a specific execution process, refer to the embodiment shown in FIG. 8 or FIG. 12. Details are not described herein again.

Step 703: Segment the target image to obtain a background obtained after segmentation.

The background is a region other than the target object in the target image. An existing image segmentation technology may be used to segment the target object to obtain the target object and the background.

Step 704: Perform inpainting on the background obtained after segmentation, to obtain a complete background.

It should be understood that, in the target image, the target object blocks the background to a degree, and after image segmentation is performed to segment the image into the target object and the background, the background obtained after segmentation is incomplete. Therefore, in this embodiment, an inpainting technology may be used to perform inpainting (inpainting) on the background obtained after segmentation, to obtain the complete background.

Step 705: Perform fusion and rendering on the three-dimensional model of the target object and the complete background to obtain a 3D image.

Based on a fusion and rendering solution, fusion processing is performed on the model (3D model) that is of the target object and that is obtained in step 702 and the background obtained after inpainting in step 704, to obtain the 3D image. It should be understood that the 3D image includes the model (3D model) of the target object.

Step 706: Display the 3D image.

After obtaining the 3D image, the electronic device may display the 3D image to the user, so that the user interacts with the 3D image. For example, the electronic device may display the 3D image by using a display screen, so that the user can view the 3D image. The electronic device may further provide a sharing function for the user, so that the user can share the 3D image with another user. The electronic device may further provide another interaction function (for example, driving the model in the 3D image to rotate, move, or motion) for the user.

It should be noted that, FIG. 15 illustrates only a possible implementation of converting the 2D image into the 3D image. In actual application, another implementation may exist. For example, in another possible implementation, step 703 and step 704 may not be performed, but a new background is obtained in another manner (for example, a new background may be generated through rendering or the like, or a new background may be obtained through shooting by the user or the like), and the new background may be the same as or different from the background in the target image. Then, in step 705, fusion and rendering are performed on the three-dimensional model of the target object and the new background to obtain a 3D image. In this implementation, the user can change various backgrounds for the three-dimensional model of the target object based on a requirement of the user, to meet a personalized requirement of the user and improve user experience.

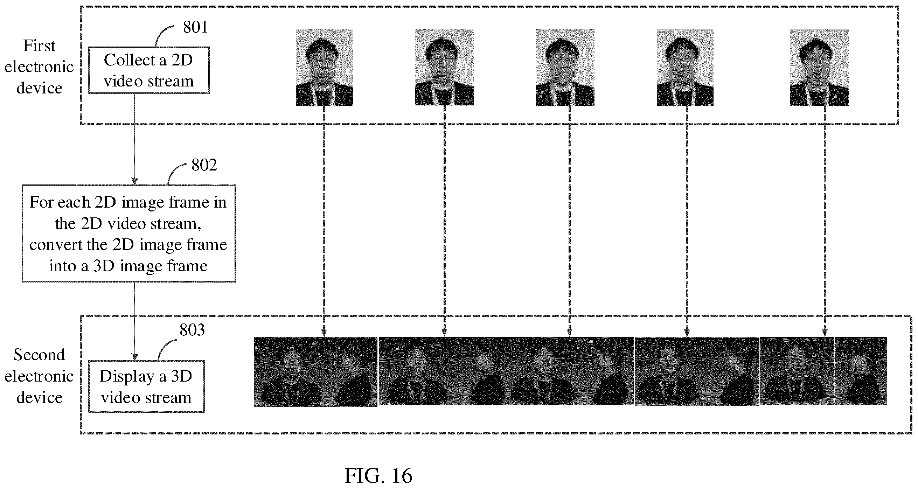

FIG. 16 is a schematic diagram of an application scenario of an image display method according to an embodiment of this application. In this embodiment, the image display method proposed in this application is applied to a scenario in which video transmission is performed between two or more electronic devices, for example, a video call scenario or a livestreaming scenario. Two electronic devices are used as an example, and it is assumed that a first electronic device is on a video call with a second electronic device.

As shown in FIG. 16, the method in this embodiment includes the following steps.

Step 801: Collect a 2D video stream.

For example, the first electronic device starts a camera, and the camera collects a video stream. Each image frame in the video stream is a 2D image frame.

Step 802: For each 2D image frame in the 2D video stream, convert the 2D image frame into a 3D image frame.

As shown in FIG. 16, it is assumed that the first electronic device successively collects five 2D image frames. In this case, for each 2D image frame, the possible implementation in the embodiment shown in FIG. 15 is used to convert the 2D image frame into a 3D image frame.

Step 803: Display a 3D video stream.

The second electronic device displays the 3D video stream by using a display screen. Each image frame in the 3D video stream is the foregoing 3D image frame obtained after conversion.

In some scenarios, step 802 in this embodiment may be performed by the first electronic device. For example, the first electronic device and the second electronic device are connected to each other by using a network, and network transmission between the first electronic device and the second electronic device supports 3D data transmission. In this scenario, the first electronic device may collect a 2D video stream, and for each currently collected 2D image frame, the first electronic device converts the 2D image frame into a 3D image frame in real time, and then sends the 3D image frame obtained after conversion to the second electronic device. In this way, the second electronic device receives a 3D video stream from the first electronic device, and displays the received 3D video stream, so that a user views the 3D video stream by using the second electronic device.

In some other scenarios, step 802 in this embodiment may be performed by the second electronic device. For example, the first electronic device collects a 2D video stream, and sends the collected 2D video stream to the second electronic device. The second electronic device receives the 2D video stream, for each currently received 2D image frame, converts the 2D image frame into a 3D image frame in real time, and then displays the 3D image frame obtained after conversion. In this way, a user views a 3D video stream by using the second electronic device.

In still some other scenarios, step 802 in this embodiment may be performed by a third electronic device. For example, the third electronic device may be a gateway device or an edge node in a communications system in which the first electronic device and the second electronic device are located. The following is described by using an example in which the third electronic device is a gateway device. For example, the first electronic device collects a 2D video stream, and sends the collected 2D video stream to the second electronic device. In a process of transmitting the 2D video stream, forwarding needs to be performed by the gateway device, namely, the first electronic device sends the 2D video stream to the gateway device, and then the gateway device forwards the 2D video stream to the second electronic device. Therefore, after receiving the 2D video stream, for each currently received 2D image frame, the gateway device converts the 2D image frame into a 3D image frame in real time, and then sends the 3D image frame obtained after conversion to the second electronic device. In this way, the second electronic device receives a 3D video stream, and displays the received 3D video stream, so that a user views the 3D video stream by using the second electronic device.

In still some other scenarios, the first electronic device and the second electronic device may be a same electronic device. This scenario is equivalent to a scenario in which the image display manner in this embodiment is applied to a video: A 2D video stream collected by an electronic device is converted into a 3D video stream, and is displayed on the electronic device, so that a user views the 3D video stream by using the electronic device.

In this embodiment, the image display method provided in this application is applied to a video transmission scenario, to implement a process of communicating the 3D video stream between two or more electronic devices, so that a video call of the user is more authentic and interesting.

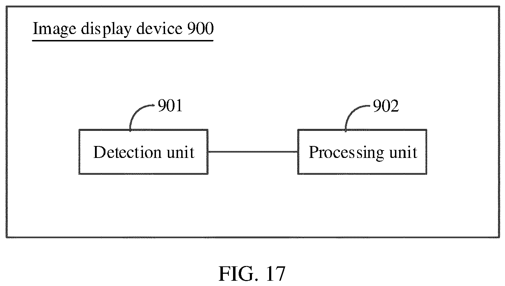

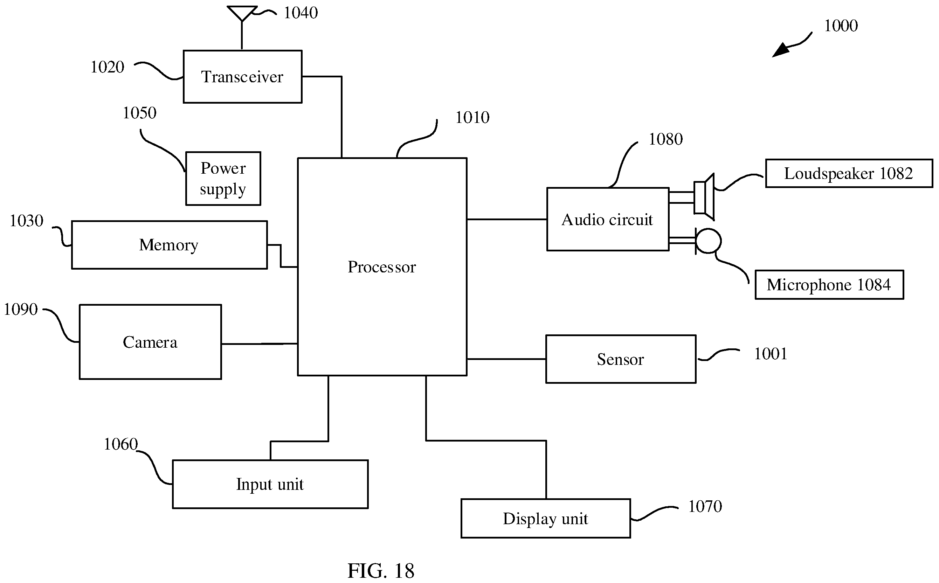

The foregoing describes in detail the image display method provided in the embodiments of this application with reference to FIG. 1 to FIG. 16. The following describes in detail apparatus embodiments of this application with reference to FIG. 17 and FIG. 18. It should be understood that an image display device in the embodiments of this application may perform the methods in the foregoing embodiments of this application. To be specific, for specific working processes of the following various products, refer to corresponding processes in the foregoing method embodiments.

FIG. 17 is a schematic block diagram of an image display device 900 according to an embodiment of this application. It should be understood that the device 900 can perform the steps in the methods shown in FIG. 3 to FIG. 16. To avoid repetition, details are not described herein again. The device 900 includes a detection unit 901 and a processing unit 902.

The detection unit 901 is configured to detect a first operation performed by a user to start an application. The processing unit 902 is configured to display a first interface on a display screen in response to the first operation. The detection unit 901 is further configured to: detect a second operation performed by the user in the first interface to indicate to shoot an image, or detect a second operation performed by the user in the first interface to indicate to select an image. The processing unit 902 is further configured to display a multi-dimensional model of a target object in the first interface or a second interface in response to the second operation, where the three-dimensional model is a multi-dimensional model constructed for the target object in a target image collected by the camera or in a selected target image, and model construction parameters required for constructing the multi-dimensional model are model construction parameters that match an object mask corresponding to the target object.

In this application, the image display device 900 may be a mobile terminal (for example, a smartphone), an AR device, a VR device, a wearable device, a vehicle-mounted device, or the like.

The application is an application that is installed on the electronic device and that has an image display function. The application may be a camera application on the electronic device, or may be an application other than the camera on the electronic device. This is not limited in this application.

Optionally, in a possible implementation, the application may be a camera application on the electronic device. A first operation performed by the user to start the camera application is detected. A first interface (for example, a shooting interface) is displayed on the display screen in response to the first operation. A second operation performed by the user in the first interface to indicate to shoot an image is detected, or a second operation performed by the user in the first interface to indicate to select an image is detected. A multi-dimensional model of a target object is displayed in the first interface or a second interface in response to the second operation. In other words, the multi-dimensional model (for example, a three-dimensional model is superimposed onto a video preview (AR) interface of the camera) of the target object may be displayed in the first interface, or in an optional design manner, the multi-dimensional model of the target object is displayed in the second interface.

Optionally, in a possible implementation, the application may be an application (for example, a photo wakeup application) other than the camera application on the electronic device. A first operation performed by the user to start the photo wakeup application is detected. A first interface is displayed on the display screen in response to the first operation. A second operation performed by the user in the first interface to indicate to shoot an image is detected, or a second operation performed by the user in the first interface to indicate to select an image is detected. A multi-dimensional model of a target object is displayed in the first interface or a second interface in response to the second operation. In other words, in response to the second operation, the multi-dimensional model of the target object may be displayed in the first interface, or in an optional design manner, the multi-dimensional model of the target object is displayed in the second interface. The second interface herein is an interface different from the first interface.

In this application, the shot target image or the selected target image includes a target object for which a multi-dimensional model (for example, a three-dimensional model) needs to be constructed, and the target object may be a person, an animal, a sculpture, or the like.

Optionally, in some possible implementations, the target image is a color image, for example, an RGB image, a YUV image, or an HSV image.

Optionally, in a possible implementation, the target image may be a single image that has depth information, for example, an RGBD image.

It may be learned from the foregoing descriptions that, in this application, the electronic device constructs a multi-dimensional model (for example, a three-dimensional model) for the target object, and displays the multi-dimensional model in the first interface or the second interface. The model construction parameters required for constructing the multi-dimensional model are model construction parameters that match the object mask corresponding to the target object. The model construction parameters are a series of parameters required for constructing a model, and include but are not limited to a semantic parameter and a depth parameter. Because the model construction parameters are model construction parameters that match the object mask of the target object, the multi-dimensional model generated by using the model construction parameters matches the target object. This improves a modeling effect of the target object.

Optionally, in a possible implementation, the multi-dimensional model that is of the target object and that is displayed in the first interface or the second interface is a static multi-dimensional model. The multi-dimensional model may be driven by a third operation input by the user to perform some actions, for example, turning, dancing, and doing exercise.

Optionally, in a possible implementation, the multi-dimensional model that is of the target object and that is displayed in the first interface or the second interface in response to the second operation is a dynamic multi-dimensional model.

In this application, the electronic device displays the multi-dimensional model of the target object instead of a planar two-dimensional object, so that an effect of displaying the target object on the electronic device is improved. In this way, the user views the multi-dimensional model of the target object. Compared with viewing a two-dimensional target object by the user, this method can enhance an authentic feeling of the user when viewing the target object, and improve user experience. Further, the model construction parameters required for constructing the multi-dimensional model are model construction parameters that match the object mask corresponding to the target object. Therefore, the multi-dimensional model constructed by using the model construction parameters is closer to the target object. This further improves a display effect of the target object.

Optionally, in an embodiment, the processing unit 902 is specifically configured to: obtain the object mask corresponding to the target object; obtain a basic model corresponding to an attribute of the target object, and obtain, based on the basic model, model construction parameters required for constructing a model of the target object; perform warp processing on the model construction parameters to obtain the model construction parameters that match the object mask; and construct the multi-dimensional model based on the model construction parameters that match the object mask.

The object mask indicates a region that is in the target image and that is surrounded by a body contour of the target object. The basic model is a multi-dimensional model (for example, a three-dimensional model) that has been constructed in advance. Optionally, a polygon mesh model may be used as the basic model, for example, a triangle mesh model.

It may be learned from the foregoing descriptions that, in this application, the model construction parameters required for constructing the model of the target object are obtained based on the basic model. Warp processing is performed on the model construction parameters to obtain the model construction parameters that match the object mask. The multi-dimensional model is constructed based on the model construction parameters that match the object mask. It may be learned that, in this application, warp processing is performed on the model construction parameters corresponding to the basic model to match the object mask of the target object, so as to construct the multi-dimensional model of the target object by using the matched model construction parameters. This can reduce a computing amount required for constructing the model and save computing resources.

It should be noted that the target object in the target image may be a person, an animal, a sculpture, a plant, or the like. Basic models of different objects may vary greatly. For example, a person model and an animal model vary greatly, a male model and a female model also vary greatly, and an adult model and a child model also vary greatly. Therefore, in this application, when the basic model is selected, the basic model corresponding to the attribute of the target object is selected. The attribute of the target object includes but is not limited to an age, a gender, a body shape, and a posture (for example, standing, sitting, and running). For example, if the target object is a male, a model corresponding to the male is selected. If the target object is a child, a model corresponding to the child is selected. If the target object is very fat, a model corresponding to a fat person is selected. It should be understood that, when the basic model is selected, one or more attributes of the target object may be considered.

Optionally, in a possible implementation, the model construction parameters may include a depth map (depth map) of a first surface of the basic model, a semantic map of the first surface of the basic model, a depth map (depth map) of a second surface of the basic model, and a semantic map of the second surface of the basic model. The first surface and the second surface are surfaces of the basic model. For example, the first surface may be a front side of the basic model, and the second surface may be a back side of the basic model.

It should be understood that, when the basic model includes a plurality of surfaces, a depth map and a semantic map of each surface may be obtained.

Optionally, in a possible implementation, the depth map and the semantic map of each surface of the basic model are obtained by rendering (rendering) each surface of the basic model.

The depth map of the first surface indicates depth information (namely, information about a distance between each vertex on the first surface and the camera) corresponding to each vertex on the first surface of the basic model, and the depth map of the second surface indicates depth information (namely, information about a distance between each vertex on the second surface and the camera) corresponding to each vertex on the second surface of the basic model. The semantic map of the first surface indicates semantic information (namely, information about a position of each vertex on the first surface on a body) corresponding to each vertex on the first surface of the basic model, and the semantic map of the second surface indicates semantic information (namely, information about a position of each vertex on the second surface on the body) corresponding to each vertex on the second surface of the basic model.

Although the attribute of the target object is considered when the basic model is selected, there may be some differences between the basic model and the target object, for example, a weight difference, a posture difference, and a height difference. Therefore, after the model construction parameters of the basic model are obtained, the model construction parameters are not directly used to construct the model. Instead, warp (warp) processing is performed on the model construction parameters, so that warped model construction parameters match the object mask. Warp processing may include but is not limited to translation transformation, affine transformation, rotation transformation, and distortion transformation. In this way, the model generated based on the warped model construction parameters is closer to the target object.

The three-dimensional model of the target object may be generated only by using a single target image and the basic model. Compared with an existing model reconstruction technology, target images at a plurality of angles of view do not need to be collected, and a video in a same scene does not need to be collected. Instead, only a single target image needs to be collected, the model construction parameters of the basic model are adjusted to match the object mask of the target object, and the model is generated based on the matched model construction parameters. Therefore, preparation working for model reconstruction is reduced. In addition, a computing amount of model reconstruction is reduced, and computing resources are saved. Further, because the model construction parameters for generating the model match the object mask of the target object, the generated multi-dimensional model matches the object mask of the target object. This improves a modeling effect.

Optionally, in an embodiment, the processing unit 902 is further configured to: adjust the basic model based on the object mask, so that a body shape of an adjusted basic model adaptively matches a body shape of the target object (for example, a degree at which the body shape of the adjusted basic model matches the body shape of the target object is higher than or equal to a matching threshold); or obtain joint information corresponding to the target object, and adjust the basic model based on the object mask and the joint information, so that a body shape and a posture of an adjusted basic model adaptively match a body shape and a posture of the target object (for example, a degree at which the body shape and the posture of the adjusted basic model match the body shape and the posture of the target object is higher than or equal to a matching threshold), where correspondingly, the model construction parameters required for constructing the model of the target object are obtained based on the adjusted basic model.

An adjustment process may be executed through iterative optimization. The parameters of the basic model are continuously adjusted based on the object mask, so that the body shape (for example, a height and a weight) of the adjusted basic model is as close as possible to the body shape of the target object. Alternatively, the parameters of the basic model are continuously adjusted based on the object mask and the joint information, so that the posture of the adjusted basic model is as close as possible to the posture of the target object (for example, a joint position in the adjusted basic model is closer to a joint position of the target object, or a length ratio of a trunk to a leg of the adjusted basic model is closer to a length ratio of a trunk to a leg of the target object), and the body shape (for example, a height and a weight) of the adjusted basic model is as close as possible to the body shape of the target object.

A process in which the basic model is adjusted based on the object mask is used as an example. In this implementation, a degree at which the body shape of the basic model matches the body shape of the target object is used as an iteration termination condition. In an example iteration process, the parameters of the basic model are continuously adjusted. If a degree at which a body shape of a basic model obtained after the parameters are adjusted matches the body shape of the target object is less than a matching threshold, the parameters of the basic model continue to be adjusted. If a degree at which a body shape of a basic model obtained after the parameters are adjusted matches the body shape of the target object is higher than or equal to a matching threshold, the iteration process is stopped. In another example iteration process, the parameters of the basic model are continuously adjusted, and the iteration process is stopped when a degree at which the body shape of the adjusted basic model matches the body shape of the target object no longer increases.

Optionally, in an embodiment, the processing unit 902 is further configured to: adjust the basic model N times based on the object mask, so that a degree at which a body shape of a basic model adjusted for an n^{th} time matches a body shape of the target object is better than a degree at which a body shape of a basic model adjusted for an m^{th} time matches the body shape of the target object; or obtain joint information corresponding to the target object, and adjust the basic model N times based on the object mask and the joint information, so that a degree at which a body shape and a posture of a basic model adjusted for an n^{th} time match a body shape and a posture of the target object is better than a degree at which a body shape and a posture of a basic model adjusted for an m^{th} time match the body shape and the posture of the target object, where N represents a preset quantity of adjustment times (for example, a maximum quantity of adjustment times), N, n, and m are positive integers, n is greater than m, and n and m are less than or equal to N; and correspondingly, the model construction parameters required for constructing the model of the target object are obtained based on the basic model adjusted N times.

In this implementation, the maximum quantity of adjustment times is used as an iteration termination condition. An example in which the maximum quantity of adjustment times is N is used. In this way, the degree at which the body shape of the basic model adjusted for the n^{th} time matches the body shape of the target object is better than the degree at which the body shape of the basic model adjusted for the m^{th} time matches the body shape of the target object, or the degree at which the body shape and the posture of the basic model adjusted for the n^{th} time match the body shape and the posture of the target object is better than the degree at which the body shape and the posture of the basic model adjusted for the m^{th} time match the body shape and the posture of the target object. It should be understood that, in an iteration process, it cannot be ensured that the basic model better matches the target object in each time of adjustment, but the adjusted basic model is closer to the target object in terms of an overall trend, where the n^{th} time of adjustment is after the m^{th} time of adjustment, and the n^{th} time of adjustment may not be limited to next adjustment adjacent to the m^{th} time of adjustment.

Before the model is generated, first, the basic model is adjusted by using the object mask (namely, one time of adjustment), so that the body shape and/or the posture of the adjusted basic model tend/adaptively matches or are/is as close as possible to the body shape and/or the posture of the target object. Then, the model construction parameters are extracted based on the adjusted basic model, and warp processing is performed on the model construction parameters based on the object mask (another adjustment), so that the warped model construction parameters highly match the object mask. A modeling effect can be further improved through two times of adjustment.

Optionally, in an embodiment, the processing unit 902 is specifically configured to: obtain the attribute of the target object based on the target image, where the attribute includes at least one of the following: a gender, an age, a body shape, and a posture; and select the basic model corresponding to the attribute of the target object from a basic model set, where the basic model set includes a plurality of basic models, and the basic models correspond to different attributes.

The basic model set may include a plurality of basic models, and each basic model corresponds to one or more attributes. For example, an attribute corresponding to a basic model 1 is a male, an adult, and a fat person, an attribute corresponding to a basic model 2 is a female and a child, an attribute corresponding to a basic model 3 is an elder and a thin person, an attribute corresponding to a basic model 4 is a cat, and an attribute corresponding to a basic model 5 is a dog. In this way, the target image may be first analyzed and identified to determine the attribute of the target object. Then, a basic model having a highest matching degree with the attribute of the target object is selected from the basic model set based on the attribute of the target object.

The selected basic model in this application is selected based on the attribute of the target object. Therefore, the multi-dimensional model obtained through modeling processing based on the basic model can effectively express the target object. This improves a modeling effect.

Optionally, in an embodiment, the basic model includes a plurality of body parts, each body part includes a plurality of vertices, a range of semantic information corresponding to vertices in different body parts is different, and semantic information corresponding to any two vertices in a same body part is different; or the basic model includes a plurality of object parts, each object part includes a plurality of vertices, a range of semantic information corresponding to vertices in different object parts is different, and semantic information corresponding to any two vertices in a same object part is different.

The target object may include a plurality of object parts, and each object part is a region of the target object. It should be understood that object part division manners corresponding to different target objects may be different.

A human body is used as an example. The target object is divided into a plurality of body parts, for example, a head, a trunk, a left arm, a right arm, a left leg, a right leg, a left hand, and a right hand. The basic model in this application is different from an existing human model. In the existing human model, semantic information is assigned to each body part. For example, semantic information corresponding to the head is 1, namely, semantic information corresponding to each vertex in the head is 1, and semantic information corresponding to the trunk is 2, namely, semantic information corresponding to each vertex in the trunk is 2. In this application, a range of semantic information corresponding to vertices in different body parts in the basic model is different, and semantic information corresponding to any two vertices in a same body part is different, so that semantic information corresponding to any two vertices in the basic model is different.

In this application, semantic information corresponding to any two vertices in the basic model is different, so that vertices in the basic model can accurately correspond to different positions on the target object. In other words, the basic model can distinguish between different positions on the target object, so that the basic model describes the target object more accurately. In this way, subsequent modeling processing is performed based on a basic model that has accurate semantic information. This can improve a modeling effect.

Optionally, in an embodiment, the model construction parameters include a depth map of a first surface of the basic model, a semantic map of the first surface of the basic model, a depth map of a second surface of the basic model, and a semantic map of the second surface of the basic model.

The depth map of the first surface indicates depth information (namely, information about a distance between each vertex on the first surface and the camera) corresponding to each vertex on the first surface of the basic model, and the depth map of the second surface indicates depth information (namely, information about a distance between each vertex on the second surface and the camera) corresponding to each vertex on the second surface of the basic model. The semantic map of the first surface indicates semantic information (namely, information about a position of each vertex on the first surface on a body) corresponding to each vertex on the first surface of the basic model, and the semantic map of the second surface indicates semantic information (namely, information about a position of each vertex on the second surface on the body) corresponding to each vertex on the second surface of the basic model.

Optionally, in an embodiment, the processing unit 902 is specifically configured to: perform warp processing on the depth map of the first surface based on the object mask and the semantic map of the first surface, so that a warped depth map of the first surface matches the object mask; and perform warp processing on the depth map of the second surface based on the object mask and the semantic map of the second surface, so that a warped depth map of the second surface matches the object mask.

The front side is used as an example. Because a front depth map and a front semantic map are obtained by rendering (rendering) the front side of the basic model, pixels in the front depth map are in a one-to-one correspondence with pixels in the front semantic map. In other words, pixels at same positions in the front depth map and the front semantic map correspond to a same vertex in the basic model. Therefore, a correspondence between each pixel in the front depth map and each pixel in the object mask may be determined by using the front semantic map. In this way, warp processing is performed on the front depth map based on the correspondence between each pixel in the front depth map and each pixel in the object mask, so that a warped front depth map matches the object mask.

It should be understood that an adjustment process of a back depth map is similar to the adjustment process of the front depth map.

It should be noted that, when warp processing is performed on the model construction parameters, warp processing may be performed only on the front depth map and the back depth map, and warp processing is not performed on the front semantic map and a back semantic map. It can be understood that, the pixels in the front depth map are in a one-to-one correspondence with the pixels in the front semantic map, and pixels in the back depth map are in a one-to-one correspondence with pixels in the back semantic map. Therefore, after warp processing is performed on the front depth map and the back map, semantic information of each pixel in a front depth map and a back depth map that are obtained after warp processing may be determined based on the foregoing correspondence.

Optionally, in an embodiment, the processing unit 902 is specifically configured to: perform mesh processing on the depth map, of the first surface, that matches the object mask and that is obtained after warp processing, to obtain mesh information of the first surface; perform mesh processing on the depth map, of the second surface, that matches the object mask and that is obtained after warp processing, to obtain mesh information of the second surface; and fuse the mesh information of the first surface with the mesh information of the second surface to obtain the multi-dimensional model of the target object.

Optionally, in a possible implementation, mesh processing may be performed by using a Poisson (possion) reconstruction technology.

Optionally, in a possible implementation, the processing unit 902 is further configured to: perform optimization adjustment on the mesh information of the first surface based on the semantic map of the first surface, and perform optimization adjustment on the mesh information of the second surface based on the semantic map of the second surface. In this way, a model obtained by fusing the mesh information, that is of the first surface and that is obtained after optimization adjustment, with the mesh information, that is of the second surface and that is obtained after optimization adjustment, better matches the target object. This improves a modeling effect.

Optionally, in an embodiment, the processing unit 902 is specifically configured to: perform joint extraction on the target object in the target image to obtain the joint information corresponding to the target object; and segment the target image based on the joint information of the target object, to obtain the object mask corresponding to the target object.

An example in which the target object is a person is used. The extracted joint information includes but is not limited to a head, a neck, a right shoulder, a right elbow, a right wrist, a left shoulder, a left elbow, a left wrist, a right hip joint, a right knee, a right ankle, a left hip joint, a left knee, a left ankle, and a body center point. The target object in the icon image is segmented based on the extracted joint information. This can improve image segmentation accuracy, so that the object mask that is of the target object and that is obtained through segmentation is more accurate.

Optionally, in an embodiment, the processing unit 902 is specifically configured to: extract texture information of the target object from the target image, and fuse the texture information with the model of the target object, so that the multi-dimensional model displayed in the first interface or the second interface is a multi-dimensional model obtained after fusion.

Optionally, the texture information includes but is not limited to skin information and clothing information. In other words, texture information such as skin and clothing of a person is extracted from the target image, a texture mapping relationship is established between the texture information and the generated model, the texture information of the target object is fused with the generated multi-dimensional model based on the texture mapping relationship, to obtain a multi-dimensional model obtained after the texture information is fused, and the multi-dimensional model obtained after fusion is displayed in the first interface or the second interface, so that the multi-dimensional model looks more authentic, and a display effect is improved.

Optionally, in an embodiment, the detection unit 901 is further configured to detect a third operation performed by the user in the first interface or the second interface, where the third operation is used to indicate a dynamic effect of the model; and the processing unit is further configured to display a dynamic multi-dimensional model in the first interface or the second interface in response to the third operation, where the dynamic multi-dimensional model is obtained by adding the dynamic effect to the multi-dimensional model obtained after fusion.

Optionally, the first interface or the second interface may further include at least one interactive control. Each interactive control may correspond to one dynamic effect. For example, the interactive control may be used to rotate the multi-dimensional model leftward or rightward. Certainly, the multi-dimensional model may be rotated in another direction. The interactive control may be used to add some rendering effects to the model, for example, a raindrop effect and an effect of floating banknotes in the air. Alternatively, the interactive control may be used to add some animation effects to the model, for example, drive the model to perform some actions, for example, dancing and doing exercise. After detecting the third operation input by the user by using the interactive control, the electronic device adds a dynamic effect corresponding to the interactive control to the multi-dimensional model, to obtain a dynamic multi-dimensional model. In this way, the electronic device displays the dynamic multi-dimensional model in the first interface or the second interface, so that the user views the multi-dimensional model with the dynamic effect. This further improves viewing experience of the user.

It should be understood that the image display device 900 herein is presented in a form of a functional unit. The term "unit" herein may be implemented in a form of software and/or hardware. This is not specifically limited. For example, "unit" may be a software program, a hardware circuit, or a combination thereof that implements the foregoing functions. The hardware circuit may include an application-specific integrated circuit (application-specific integrated circuit, ASIC), an electronic circuit, a memory and a processor (for example, a shared processor, a dedicated processor, or a group processor) configured to execute one or more software or firmware programs, a merged logic circuit, and/or another suitable component that supports the described functions.

Therefore, the units in the examples described in the embodiments of this application can be implemented by electronic hardware or a combination of computer software and electronic hardware. Whether the functions are performed by hardware or software depends on particular applications and design constraints of the technical solutions. A person skilled in the art may use different methods to implement the described functions of each particular application, but it should not be considered that the implementation goes beyond the scope of this application.

An embodiment of this application further provides an electronic device. The electronic device may be a terminal device, or may be a circuit device built into the terminal device. The device may be configured to perform the functions/steps in the foregoing method embodiments.

As shown in FIG. 18, an electronic device 1000 includes a processor 1010 and a transceiver 1020. Optionally, the electronic device 1000 may further include a memory 1030. The processor 1010, the transceiver 1020, and the memory 1030 may communicate with each other through an internal connection path to transfer a control signal and/or a data signal. The memory 1030 is configured to store a computer program. The processor 1010 is configured to invoke and run the computer program in the memory 1030.

Optionally, the electronic device 1000 may further include an antenna 1040, configured to send a wireless signal output by the transceiver 1020.

The processor 1010 and the memory 1030 may be integrated into one processing apparatus, or more commonly, components independent of each other. The processor 1010 is configured to execute program code stored in the memory 1030 to implement the foregoing functions. During specific implementation, the memory 1030 may alternatively be integrated into the processor 1010, or may be independent of the processor 1010. The processor 1010 may correspond to the processing unit 902 in the device 900 in FIG. 17.

In addition, to improve the functions of the electronic device 1000, the electronic device 1000 may further include one or more of an input unit 1060, a display unit 1070, an audio circuit 1080, a camera 1090, a sensor 1001, and the like. The audio circuit may further include a speaker 1082, a microphone 1084, and the like. The display unit 1070 may include a display screen, and the display unit 1070 may correspond to the detection unit 901 in the device 900 in FIG. 17.

Optionally, the electronic device 1000 may further include a power supply 1050, configured to supply power to various devices or circuits in the terminal device.

It should be understood that the electronic device 1000 shown in FIG. 18 can implement processes in the method embodiments shown in FIG. 3 to FIG. 16. Operations and/or functions of the modules in the electronic device 1000 are separately intended to implement corresponding procedures in the foregoing method embodiments. For details, refer to the descriptions in the foregoing method embodiments. To avoid repetition, detailed descriptions are properly omitted herein.

It should be understood that the processor 1010 in the electronic device 1000 shown in FIG. 18 may be a system on a chip (system on a chip, SOC). The processor 1010 may include a central processing unit (central processing unit, CPU), a graphics processing unit (graphics processing unit, GPU), and a neural-network processing unit (neural-network processing unit, NPU), and may further include another type of processor. The CPU may be referred to as a host CPU, the NPU is mounted to the host CPU (Host CPU) as a coprocessor, and the host CPU assigns a task. The processors work together to implement the foregoing method procedures, and each processor may selectively execute a part of software drivers.

For example, in FIG. 3, step 310 to step 330 in FIG. 3 may be performed by the CPU, and step 340 may be performed by the CPU, the NPU, or the GPU. In FIG. 8, step 502 in FIG. 8 may be performed by the NPU, step 503 may be performed by the CPU, step 504 may be performed by the GPU, step 505 may be performed by the CPU, and step 506 may be performed by the CPU and/or the GPU. In FIG. 12, step 602 and step 603 in FIG. 12 may be performed by the NPU, step 604 and step 605 may be performed by the CPU, step 606 may be performed by the GPU, step 607 may be performed by the CPU, and step 608 and step 609 may be performed by the CPU and/or the GPU.

In conclusion, some processors or processing units in the processor 1010 may work together to implement the foregoing method procedure, and software programs corresponding to the processors or processing units may be stored in the memory 1030.

This application further provides a computer-readable storage medium. The computer-readable storage medium stores instructions. When the instructions are run on a computer, the computer is enabled to perform the steps in the foregoing image display method.

This application further provides a computer program product including instructions. When the computer program product runs on a computer or at least one processor, the computer is enabled to perform the steps in the foregoing image display method.

This application further provides a chip, including a processor. The processor is configured to read a computer program stored in a memory and run the computer program, to perform a corresponding operation and/or procedure in the image display method provided in this application.

Optionally, the chip further includes the memory. The memory is connected to the processor through a circuit or a wire, and the processor is configured to read and execute the computer program in the memory. Further, optionally, the chip further includes a communications interface, and the processor is connected to the communications interface. The communications interface is configured to receive data and/or information that needs to be processed, and the processor obtains the data and/or information from the communications interface, and processes the data and/or information. The communications interface may be an input/output interface.

In the foregoing embodiments, the processor 1010 may include, for example, a central processing unit (central processing unit, CPU), a microprocessor, a microcontroller, or a digital signal processor, and may further include a GPU, an NPU, and an ISP. The processor may further include a necessary hardware accelerator or a logic processing hardware circuit, for example, an application-specific integrated circuit (application-specific integrated circuit, ASIC), or one or more integrated circuits configured to control programs to perform the technical solutions in this application. In addition, the processor may have a function of operating one or more software programs, and the software program may be stored in the memory.

The memory may be a read-only memory (read-only memory, ROM), another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage medium, an optical disc storage medium (including a compact optical disc, a laser disc, an optical disc, a digital versatile optical disc, a Blu-ray disc, and the like), a magnetic disk storage medium or another magnetic storage device, any other medium that can be used to carry or store expected program code in a form of instructions or a data structure and that can be accessed by a computer, or the like.

In this embodiment of this application, "at least one" means one or more, and "a plurality of" means two or at least two. The term "and/or" describes an association relationship for describing associated objects and indicates that three relationships may exist. For example, A and/or B may indicate the following three cases: Only A exists, both A and B exist, and only B exists. A and B may be in a singular form or a plural form. The character "/" usually represents an "or" relationship between the associated objects. At least one of the following items and similar expressions refer to any combination of the items, including a single item or any combination of plural items. For example, at least one of a, b, and c may indicate a, b, c, a and b, a and c, b and c, or a, b, and c, where a, b, and c may be singular or plural.

A person of ordinary skill in the art may be aware that, with reference to the examples described in the embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions of each particular application, but it should not be considered that the implementation goes beyond the scope of this application.

It may be clearly understood by a person skilled in the art that, for ease and brevity of description, for a detailed working process of the foregoing system, apparatus, and unit, refer to a corresponding process in the foregoing method embodiments. Details are not described herein again.

In the embodiments of this application, when any of the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The storage medium includes any medium that can store program code such as a USB flash drive, a removable hard disk, a read-only memory (read-only memory, ROM), a random access memory (random access memory, RAM), a magnetic disk, or an optical disc.

The foregoing descriptions are merely specific implementations of this application. Any variation or replacement readily figured out by a person skilled in the art within the technical scope disclosed in this application shall fall within the protection scope of this application. The protection scope of this application shall be subject to the protection scope of the claims.

## Claims

1. An image display method, applied to an electronic device having a display screen and a camera, comprising:
detecting a first operation performed by a user to start an application;
displaying a first interface on the display screen in response to the first operation;
detecting a second operation performed by the user in the first interface to indicate to shoot an image, or detecting a second operation performed by the user in the first interface to indicate to select an image; and
displaying a multi-dimensional model of a target object in the first interface or a second interface in response to the second operation, wherein the multi-dimensional model is a multi-dimensional model constructed for the target object in a target image collected by the camera or in a selected target image, and model construction parameters required for constructing the multi-dimensional model are model construction parameters that match an object mask of the target object.

2. The method according to claim 1, wherein a process of construction comprises:
obtaining the object mask corresponding to the target object;
obtaining a basic model corresponding to an attribute of the target object, and obtaining, based on the basic model, model construction parameters required for constructing a model of the target object;
performing warp processing on the model construction parameters to obtain the model construction parameters that match the object mask; and
constructing the multi-dimensional model based on the model construction parameters that match the object mask.

3. The method according to claim 2, wherein before the obtaining, based on the basic model, model construction parameters required for constructing a model of the target object, the method further comprises:
adjusting the basic model based on the object mask, so that a body shape of an adjusted basic model adaptively matches a body shape of the target object; or
obtaining joint information corresponding to the target object, and adjusting the basic model based on the object mask and the joint information, so that a body shape and a posture of an adjusted basic model adaptively match a body shape and a posture of the target object, wherein
correspondingly, the model construction parameters required for constructing the model of the target object are obtained based on the adjusted basic model.

4. The method according to claim 2, wherein before the obtaining, based on the basic model, model construction parameters required for constructing a model of the target object, the method further comprises:
adjusting the basic model N times based on the object mask, so that a degree at which a body shape of a basic model adjusted for an n^{th} time matches a body shape of the target object is better than a degree at which a body shape of a basic model adjusted for an m^{th} time matches the body shape of the target object; or
obtaining joint information corresponding to the target object, and adjusting the basic model N times based on the object mask and the joint information, so that a degree at which a body shape and a posture of a basic model adjusted for an n^{th} time match a body shape and a posture of the target object is better than a degree at which a body shape and a posture of a basic model adjusted for an m^{th} time match the body shape and the posture of the target object, wherein
N represents a preset quantity of adjustment times, N, n, and m are positive integers, n is greater than m, and n and m are less than or equal to N; and
correspondingly, the model construction parameters required for constructing the model of the target object are obtained based on the basic model adjusted N times.

5. The method according to any one of claims 2 to 4, wherein the obtaining a basic model corresponding to an attribute of the target object comprises:
obtaining the attribute of the target object based on the target image, wherein the attribute comprises at least one of the following: a gender, an age, a body shape, and a posture; and
selecting the basic model corresponding to the attribute of the target object from a basic model set, wherein the basic model set comprises a plurality of basic models, and the basic models correspond to different attributes.

6. The method according to any one of claims 2 to 5, wherein the basic model comprises a plurality of body parts, each body part comprises a plurality of vertices, a range of semantic information corresponding to vertices in different body parts is different, and semantic information corresponding to any two vertices in a same body part is different; or
the basic model comprises a plurality of object parts, each object part comprises a plurality of vertices, a range of semantic information corresponding to vertices in different object parts is different, and semantic information corresponding to any two vertices in a same object part is different.

7. The method according to claim 6, wherein semantic information corresponding to vertices in a same body part is consecutive numerical semantic information; or
semantic information corresponding to vertices in a same object part is consecutive numerical semantic information.

8. The method according to any one of claims 2 to 7, wherein the model construction parameters comprise a depth map of a first surface of the basic model, a semantic map of the first surface of the basic model, a depth map of a second surface of the basic model, and a semantic map of the second surface of the basic model.

9. The method according to claim 8, wherein the performing warp processing on the model construction parameters to obtain the model construction parameters that match the object mask comprises:
performing warp processing on the depth map of the first surface based on the object mask and the semantic map of the first surface, so that a warped depth map of the first surface matches the object mask; and
performing warp processing on the depth map of the second surface based on the object mask and the semantic map of the second surface, so that a warped depth map of the second surface matches the object mask.

10. The method according to claim 9, wherein the constructing the multi-dimensional model based on the model construction parameters that match the object mask comprises:
performing mesh processing on the depth map, of the first surface, that matches the object mask and that is obtained after warp processing, to obtain mesh information of the first surface;
performing mesh processing on the depth map, of the second surface, that matches the object mask and that is obtained after warp processing, to obtain mesh information of the second surface; and
fusing the mesh information of the first surface with the mesh information of the second surface to obtain the multi-dimensional model of the target object.

11. The method according to any one of claims 1 to 10, wherein the object mask corresponding to the target object is obtained by using the following method:
performing joint extraction on the target object in the target image to obtain the joint information corresponding to the target object; and
segmenting the target image based on the joint information of the target object, to obtain the object mask corresponding to the target object.

12. The method according to any one of claims 1 to 10, wherein after the constructing the multi-dimensional model, the method further comprises:
extracting texture information of the target object from the target image, and fusing the texture information with the model of the target object, so that the multi-dimensional model displayed in the first interface or the second interface is a multi-dimensional model obtained after fusion.

13. The method according to claim 12, wherein the method further comprises:
detecting a third operation performed by the user in the first interface or the second interface, wherein the third operation is used to indicate a dynamic effect of the model; and
displaying a dynamic multi-dimensional model in the first interface or the second interface in response to the third operation, wherein the dynamic multi-dimensional model is obtained by adding the dynamic effect to the multi-dimensional model obtained after fusion.

14. An image display device, comprising:
a display screen, a camera, one or more processors, a memory, a plurality of application programs, and one or more computer programs, wherein the one or more computer programs are stored in the memory, the one or more computer programs comprise instructions, and when the instructions are executed by the device, the device is enabled to perform the following steps:
detecting a first operation performed by a user to start an application;
displaying a first interface on the display screen in response to the first operation;
detecting a second operation performed by the user in the first interface to indicate to shoot an image, or detecting a second operation performed by the user in the first interface to indicate to select an image; and
displaying a multi-dimensional model of a target object in the first interface or a second interface in response to the second operation, wherein the multi-dimensional model is a multi-dimensional model constructed for the target object in a target image collected by the camera or in a selected target image, and model construction parameters required for constructing the multi-dimensional model are model construction parameters that match an object mask corresponding to the target object.

15. The device according to claim 14, wherein when the instructions are executed by the device, the device is enabled to specifically perform the following steps:
obtaining the object mask corresponding to the target object;
obtaining a basic model corresponding to an attribute of the target object, and obtaining, based on the basic model, model construction parameters required for constructing a model of the target object;
performing warp processing on the model construction parameters to obtain the model construction parameters that match the object mask; and
constructing the multi-dimensional model based on the model construction parameters that match the object mask.

16. The device according to claim 15, wherein when the instructions are executed by the device, the device is enabled to further perform the following steps:
adjusting the basic model based on the object mask, so that a body shape of an adjusted basic model adaptively matches a body shape of the target object; or
obtaining joint information corresponding to the target object, and adjusting the basic model based on the object mask and the joint information, so that a body shape and a posture of an adjusted basic model adaptively match a body shape and a posture of the target object, wherein
correspondingly, the model construction parameters required for constructing the model of the target object are obtained based on the adjusted basic model.

17. The device according to claim 15, wherein when the instructions are executed by the device, the device is enabled to further perform the following steps:
adjusting the basic model N times based on the object mask, so that a degree at which a body shape of a basic model adjusted for an n^{th} time matches a body shape of the target object is better than a degree at which a body shape of a basic model adjusted for an m^{th} time matches the body shape of the target object; or
obtaining joint information corresponding to the target object, and adjusting the basic model N times based on the object mask and the joint information, so that a degree at which a body shape and a posture of a basic model adjusted for an n^{th} time match a body shape and a posture of the target object is better than a degree at which a body shape and a posture of a basic model adjusted for an m^{th} time match the body shape and the posture of the target object, wherein
N represents a preset quantity of adjustment times, N, n, and m are positive integers, n is greater than m, and n and m are less than or equal to N; and
correspondingly, the model construction parameters required for constructing the model of the target object are obtained based on the basic model adjusted N times.

18. The device according to any one of claims 15 to 17, wherein when the instructions are executed by the device, the device is enabled to specifically perform the following steps:
obtaining the attribute of the target object based on the target image, wherein the attribute comprises at least one of the following: a gender, an age, a body shape, and a posture; and
selecting the basic model corresponding to the attribute of the target object from a basic model set, wherein the basic model set comprises a plurality of basic models, and the basic models correspond to different attributes.

19. The device according to any one of claims 15 to 18, wherein the basic model comprises a plurality of body parts, each body part comprises a plurality of vertices, a range of semantic information corresponding to vertices in different body parts is different, and semantic information corresponding to any two vertices in a same body part is different; or
the basic model comprises a plurality of object parts, each object part comprises a plurality of vertices, a range of semantic information corresponding to vertices in different object parts is different, and semantic information corresponding to any two vertices in a same object part is different.

20. The device according to claim 19, wherein semantic information corresponding to vertices in a same body part is consecutive numerical semantic information; or
semantic information corresponding to vertices in a same object part is consecutive numerical semantic information.

21. The device according to any one of claims 15 to 20, wherein the model construction parameters comprise a depth map of a first surface of the basic model, a semantic map of the first surface of the basic model, a depth map of a second surface of the basic model, and a semantic map of the second surface of the basic model.

22. The device according to claim 21, wherein when the instructions are executed by the device, the device is enabled to specifically perform the following steps:
performing warp processing on the depth map of the first surface based on the object mask and the semantic map of the first surface, so that a warped depth map of the first surface matches the object mask; and
performing warp processing on the depth map of the second surface based on the object mask and the semantic map of the second surface, so that a warped depth map of the second surface matches the object mask.

23. The device according to claim 22, wherein when the instructions are executed by the device, the device is enabled to specifically perform the following steps:
performing mesh processing on the depth map, of the first surface, that matches the object mask and that is obtained after warp processing, to obtain mesh information of the first surface;
performing mesh processing on the depth map, of the second surface, that matches the object mask and that is obtained after warp processing, to obtain mesh information of the second surface; and
fusing the mesh information of the first surface with the mesh information of the second surface to obtain the multi-dimensional model of the target object.

24. The device according to any one of claims 14 to 23, wherein when the instructions are executed by the device, the device is enabled to specifically perform the following steps:
performing joint extraction on the target object in the target image to obtain the joint information corresponding to the target object; and
segmenting the target image based on the joint information of the target object, to obtain the object mask corresponding to the target object.

25. The device according to any one of claims 14 to 23, wherein when the instructions are executed by the device, the device is enabled to further perform the following steps:
extracting texture information of the target object from the target image, and fusing the texture information with the model of the target object, so that the multi-dimensional model displayed in the first interface or the second interface is a multi-dimensional model obtained after fusion.

26. The device according to claim 25, wherein when the instructions are executed by the device, the device is enabled to further perform the following steps:
detecting a third operation performed by the user in the first interface or the second interface, wherein the third operation is used to indicate a dynamic effect of the model; and
displaying a dynamic multi-dimensional model in the first interface or the second interface in response to the third operation, wherein the dynamic multi-dimensional model is obtained by adding the dynamic effect to the multi-dimensional model obtained after fusion.

27. A computer storage medium, comprising computer instructions, wherein when the computer instructions are executed on an electronic device, the electronic device is enabled to perform the image display method according to any one of claims 1 to 13.

28. A chip, comprising a processor and a data interface, wherein the processor reads, through the data interface, instructions stored in a memory, to implement the image display method according to any one of claims 1 to 13.

29. A computer program product, wherein when the computer program product is executed by a processor, the image display method according to any one of claims 1 to 13 is implemented.
